(19) Europäisches Patentamt
European Patent Office
Office européen des brevets

(11) EP 1 764 344 B1

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(51) Int Cl.:
***C01B 33/193*** *(2006.01)*

(21) Anmeldenummer: **06115480.3**

(22) Anmeldetag: **14.06.2006**

(54) **Fällungskieselsäure mit besonderer Porengrößenverteilung**

Precipitated silica having a specific pore size distribution

Silice de précipitation présentant une distribution granulométrique particulière

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.09.2005 DE 102005043202**

(43) Veröffentlichungstag der Anmeldung:
**21.03.2007 Patentblatt 2007/12**

(73) Patentinhaber: **Evonik Degussa GmbH**
**45128 Essen (DE)**

(72) Erfinder:
- **Stenzel, Oleg**
**50999, Köln (DE)**
- **Luginsland, Hans-Detlef**
**Hoboken, NJ 07030 (US)**
- **Uhrlandt, Stefan**
**Belle Mead, NJ 08502 (US)**
- **Wehmeier, André**
**48429, Rheine (DE)**

(56) Entgegenhaltungen:
**EP-A1- 0 983 966 EP-A1- 1 295 850**
**EP-A1- 1 762 544**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 764 344 B1

## Beschreibung

Die vorliegende Erfindung betrifft Fällungskieselsäuren, die eine besonders breite Porengrößenverteilung der Poren mit einem Porendurchmesser kleiner als der des Maximums der Ableitung der Porenvolumenverteilungsfunktion, bei gleichzeitig geringer Mikroporosität und hoher Gummiaktivität aufweisen, ein Verfahren zu deren Herstellung und deren Verwendung als Füllstoff für Gummimischungen.

Der Einsatz von Fällungskieselsäuren in Elastomermischungen wie zum Beispiel Reifenlaufflächenmischungen ist lange bekannt (EP 0501227). Für die Verwendung von Kieselsäuren als verstärkenden Füllstoff in Kautschukmischungen, wie sie u. a. zur Herstellung von luftgefüllten Reifen und technischen Gummiartikeln Verwendung finden, werden hohe Anforderungen gestellt. Sie sollen leicht und gut im Kautschuk einarbeitbar und dispergierbar sein und in Verbindung mit einem Kopplungsreagenz, vorzugsweise einer bifunktionellen Organosiliziumverbindung, eine chemische Verbindung mit dem Kautschuk eingehen, die zu der angestrebten hohen Verstärkung der Gummimischung führt. Die Verstärkungseigenschaft kann insbesondere an hohen statischen Spannungswerten und einem niedrigen Abriebswert festgemacht werden. Für die Verstärkungseigenschaft der Kieselsäuren ist insbesondere die Teilchengröße, Oberflächenmorphologie, Oberflächenaktivität sowie das Anbindungsvermögen des Kopplungsreagenzes von entscheidender Bedeutung.

Zudem ist dem Fachmann bekannt, dass niedermolekulare Verbindungen, wie z. B. die bifunktionellen Organosiliziumverbindungen und Vulkanisationsbeschleuniger, in den Poren der mikroporösen Kieselsäure physi- und chemisorbieren können und damit für Ihre Funktion als Kautschukhaftvermittler bzw. Vulkanisationsbeschleuniger zur Kautschukvernetzung nur noch eingeschränkt ausüben können.

Ferner ist dem Fachmann bekannt, dass das Kopplungsreagenz, üblicherweise eine bifunktionelle Organosiliziumverbindung bekannt aus S. Wolff, "Chemical Aspects of Rubber Reinforcement by Fillers", Rubber Chem. Technol. 69, 325 (1996), die kautschukwirksame Oberfläche möglichst homogen und quantitativ modifizieren soll. Die Modifizierung kann durch eine Vorbelegung der Kieselsäure in Substanz oder in Lösung/Suspension (ex-situ) (U. Görl, R. Panenka, "Silanisierte Kieselsäuren - Eine neue Produktklasse für zeitgemäße Mischungsentwicklung", Kautsch. Gummi Kunstst. 46, 538 (1993)) sowie während des Compounds", paper No. 34 presented at the ACS Meeting, April 4-6, 2000, Dallas, Texas/USA) erfolgen, wobei die in-situ Modifizierung das zu bevorzugende und auch üblicherweise angewandte Verfahren darstellt. Um eine schnelle und quantitative Silanisierung der kautschukwirksamen Oberfläche zu gewährleisten, ist es daher notwendig die Oberfläche gezielt mit reaktiven Silanolgruppen anzureichern, an denen die Anbindung der Organosiliziumverbindung erfolgen kann. Die Silanolgruppenzahl kann u. a. als Searszahl $V_2$ quantifiziert werden (vgl. R. K. Iler, "The Chemistry of Silica", John Wiley & Sons (1979)). Die Interaggregatstruktur von Kieselsäuren wird üblicherweise mittels der DBP-Messung bestimmt (J. Behr, G. Schramm, "Über die Bestimmung der Ölzahl von Kautschukfüllstoffen mit dem Brabender-Plastographen", Gummi Asbest Kunstst. 19, 912 (1966)). Eine hohe DBP-Zahl ist notwendig, um eine optimale Dispersion des Füllstoffs im Kautschuk zu gewährleisten. Eine Feuchte > 4 % ist notwendig, um eine schnelle und vollständige Silanisierung der Kieselsäureoberfläche mit einer Organosiliziumverbindung zu gewährleisten (U. Görl, A. Hunsche, A. Müller, H. G. Koban, "Investigations into the Silica/Silane Reaction System", Rubber Chem. Technol. 70, 608 (1997)). Die Feuchte liegt typischer Weise zwischen 4 und 8 %.

Hinsichtlich der Herstellung von Kieselsäuren sind dem Fachmann verschiedene Verfahren bekannt. So wurden Fällungen bei konstantem pH-Wert in der EP 0937755 beschrieben. Kieselsäuren, die bei konstantem Kationenüberschuss gefällt wurden, wurden in der DE 10124298 offenbart. In der EP 0755899 A2 und der US 4001379 wurden Fällungen bei konstanter Alkalizahl (AZ-Zahl) beschrieben. Kieselsäuren für Gummianwendungen werden oftmals unter Einhaltung eines konstanten pH-Wert zwischen 7 und 10 hergestellt, siehe z. B. EP 0901986 A1.

In WO 2003016215 werden Kieselsäuren beschrieben, welche ein Porenverhältnis von V(d5-d50)/V(d5-d100) > 0,66 aufweisen. Die EP 0942029 offenbart wiederum Kieselsäuren für Elastomerenmischungen, die zwei unterschiedliche Aggregattypen aufweisen.

Aus EP 1295850 A1 sind Fällungskieselsäuren bekannt mit einem BET/CTAB-Verhältnis größer 1,3.
Ferner sind aus EP 0983966 A1 mit $Al_2O_3$ dotierte Kieselsäuren bekannt

Aufgabe der vorliegenden Erfindung war es, Fällungskieselsäuren und ein Verfahren zu deren Herstellung bereit zu stellen, die besonders gut als Verstärker in Elastomerenmischungen geeignet sind. Ferner soll ein Verfahren zur Herstellung der erfindungsgemäßen Kieselsäuren zur Verfügung gestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Kieselsäuren gelöst wird.

Gegenstand der vorliegenden Erfindung, sind Fällungskieselsäuren, gekennzeichnet durch die folgenden physikalisch-chemischen Parameter:

| | |
|---|---|
| relative Breite γ der Porengrößenverteilung | 4,0 bis 10,0 (g nm)/ml, |
| BET-Oberfläche | 90 bis 320 $m^2$/g, |
| CTAB-Oberfläche | 100 bis 200 $m^2$/g. |
| Searszahl $V_2$ | 25 bis 40 ml/(5 g), |
| Searszahl $V_2$/CTAB-Verhältnis | 0,16 bis 0,28 ml/(5 $m^2$), |
| BET/CTAB-Quotient | 0,90 bis 1,30. |

Gegenstand der Erfindung sind auch Fällungskieselsäuren, die neben den genannten Parametern, unabhängig voneinander, einen oder mehrere der folgenden physikalisch-chemischen Parameter aufweisen:

| | |
|---|---|
| BET/CTAB-Verhältnis | größer als 0,9 bis 1,30, |
| Zetapotential bei pH 5 | -12 bis -30 mV, |
| DBP-Zahl | 200 bis 330 g/(100 g), |
| Primärteilchendurchmesser | 10 - 40 nm, |
| $Al_2O_3$-Gehalt | < 5 Gew.-%, |
| Siebrückstand (Ro-Tap, > 300 μm) ≥ | 80 Gew.-%, |
| Siebfraktion (Ro-Tap, < 75 μm) | ≤ 10 Gew.-%, |
| Kohlenstoffgehalt | 0,1 bis 20,0 Gew.-% |

und in Form von Pulvern oder in Form von etwa kugelförmigen Partikeln (Mikrogranulate) oder als Granulate vorliegen.

Ein weiterer Gegenstand der vorliegenden Erfindung ist ein Verfahren zur Herstellung der erfindungsgemäßen Fällungskieselsäuren.

Ein weiterer Gegenstand der vorliegenden Erfindung ist die Verwendung der erfindungsgemäßen Kieselsäuren in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Ein weiterer Gegenstand der Erfindung sind Elastomerenmischungen, vulkanisierbare Kautschukmischungen oder sonstige Vulkanisate sowie Reifen, die die erfindungsgemäßen Kieselsäuren enthalten.

Die erfindungsgemäßen Fällungskieselsäuren haben unter anderem den Vorteil, dass sie nach ihrer Einarbeitung in Kautschuk eine niedrige Hysterese bewirken, also bei mechanisch-dynamischer Belastung der Mischung einen geringen Wärmeaufbau hervorrufen und folglich z. B. einen niedrigen Rollwiderstand eines Reifens erzeugen. Ferner wird ein guter Dispersionskoeffizient und eine hohe Verstärkung erreicht, um einen geringen Abrieb des Reifens zu erzeugen.

Bisher konnten verbreiterte Porengrößenverteilungen nur durch Mischungen verschiedener Kieselsäuren erreicht werden. In solchen Mischungen lagen die Partikel von mindestens zwei unterschiedlichen Kieselsäuren nebeneinander in der Mischung vor. Dies ist mit einigen Nachteilen behaftet. So muss zum einen ein zusätzlicher Mischungsschritt vorgenommen werden und es muss sichergestellt werden, dass die Mischung hinreichend homogen ist. Ein solches Verfahren hat daher bislang keine technische Relevanz erlangt. Mit den erfindungsgemäßen Fällungskieselsäuren ist es nun gelungen, eine besondere relative Breite γ der Porengrößenverteilung in einer einzigen Sorte von Kieselsäurepartikeln zu erreichen. Dadurch, dass es sich bei den erfindungsgemäßen Fällungskieselsäuren nicht um eine Mischung von unterschiedlichen Partikelsorten handelt, konnten die o. g. Nachteile behoben werden. Die erfindungsgemäßen Kieselsäuren unterscheiden sich somit von den in EP 0942029 beschriebenen Kieselsäuren.

Eine weiterer Vorteil der erfindungsgemäßen Fällungskieselsäuren ist die besonders hohe Silanolgruppendichte. Die Silanolgruppen auf der Kieselsäureoberfläche fungieren in Kautschuk- bzw. in Gummimischungen als mögliche chemische Reaktionspartner mit einem Kopplungsreagens. Dieses ist zum Beispiel ein bifunktionelles Silan wie Bis(3-triethoxysilylpropyl)tetrasulfan oder Bis(3-triethoxysilylpropyl)disulfan, welches die Anbindung der Kieselsäure an die Kautschukmatrix ermöglicht. Durch eine möglichst hohe Anzahl an Silanolgruppen erreicht man also eine hohe Wahrscheinlichkeit einer Kopplung zwischen Kieselsäure und dem Kopplungsreagens und dadurch eine hohe Wahrscheinlichkeit der Anbindung der Kieselsäure an die Kautschukmatrix, was letztendlich zu einem höherem Verstärkungspotential führt.

In Summe führen die besonderen Eigenschaften der erfindungsgemäßen Fällungskieselsäuren und dabei insbesondere

- die hohe relative Breite γ der Porengrößenverteilung,

- die hohe Silanolgruppendichte,
- die geringe Mikroporosität

somit zu folgenden Vorteilen

- nach Einarbeitung in Elastomeren- und Kautschukmischungen aufgrund der Porengrößenverteilung zu einem außergewöhnlich niedrigen Hystereseverlust,
- in Elastomeren- und Kautschukmischungen aufgrund der spezifischen CTAB-Oberflächenwerte zu einer hohen Verstärkung und einem verbesserten Abriebverhalten,
- einem guten Dispergierverhalten bei gleichzeitig gutem Einarbeitungsverhalten in den Kautschuk.

Neben der geringen Mikroporösität trägt auch das niedrige Zetapotential bei pH 5 zu einer vorteilhaft hohen Kautschukaktivität und Vernetzungsdichte bei.
Die Gegenstände der Erfindung werden im nachfolgenden im Detail beschrieben.
In der vorliegenden Erfindung werden die Begriffe Kieselsäure und Fällungskieselsäure synonym verwendet.
Die erfindungsgemäßen Kieselsäuren weisen eine breite Porengrößenverteilung der Poren mit einem Porendurchmesser kleiner als der des Maximums der Ableitung der Porenvolumenverteilungsfunktion auf, welche mittels Quecksilber-Porosimetrie bestimmt wird. Da Kieselsäuren in verschiedenen Darreichungsformen vorliegen können - z. B. in Form von Pulvern, kugelförmigen Partikeln oder Granulaten - muss, um einen von der Darreichungsform unabhängigen Messwert zu erhalten, zuvor eine mechanische Druckbehandlung der Kieselsäure erfolgen.
Anschließend wird das mittels der Quecksilber-Porosimetrie bestimmte Porenvolumen im Bereich von 3,5 nm bis 5 $\mu$m ausgewertet. Dazu wird auf die Daten der negativen logarithmischen Ableitung des kumulativen Porenvolumens ein Algorithmus angewendet, der zuerst den häufigsten, charakteristischen Porendurchmesser bestimmt. Dieser liegt typischer Weise im Bereich von 10 bis 100 nm. Ausgehend von diesem Wert erfolgt die weitere Auswertung gemäß der Angaben im experimentellen Teil. Man erhält damit eine relative **Breite $\gamma$ der Porengrößenverteilung.,** welche unsymmetrische Porengrößerteilungen berücksichtigt. Somit ist die relative Breite $\gamma$ ein charakteristisches, von der Darreichungsform unabhängiges und gut reproduzierbar zu bestimmendes Merkmal, welches nur die Poren beschreibt, die einen kleineren Durchmesser als die häufigsten Poren aufweisen (vgl. Figur 1). Dieser Porengrößenbereich entspricht vorwiegend dem Porenvolumen zwischen den zu Kieselsäureaggregaten verwachsenen Primärpartikeln und erlaubt eine Aussage über deren Aggregation. Die relative Breite $\gamma$ der Porengrößenverteilung ruft nach Einarbeitung der Fällungskieselsäuren in Kautschuk u. a. eine niedrige Hysterese hervor und gewährleistet somit einen niedrigen Rollwiderstand eines Reifens. Die relative Breite $\gamma$ der Porengrößenverteilung liegt im Bereich von 4,0 bis 10,0 (g nm)/ml, bevorzugt von 4,3 bis 8,5 (g nm)/ml und besonders bevorzugt von 4,5 bis 8,5 (g nm)/ml sowie von 4,5 bis 7,5 (g nm)/ml.
Die erfindungsgemäßen Fällungskieselsäuren weisen zudem eine hohe absolute **Searszahl $V_2$** auf. Die Searszahl $V_2$ ist ein Maß zur Beschreibung der Silanolgruppenanzahl der Kieselsäure. Die Searszahl $V_2$ der erfindungsgemäßen Kieselsäuren liegt bevorzugt im Bereich von 26 bis 40 ml/(5 g), besonders bevorzugt von 26 bis 36 ml/(5 g) und ganz besonders bevorzugt von 26 bis 33 ml/(5 g) sowie 27 bis 31 ml/(5 g).
Die Angabe der absoluten Zahl der Silanolgruppen alleine ist jedoch nicht immer geeignet, um eine Fällungskieselsäure hinreichend zu charakterisieren, da Fällungskieselsäuren mit hoher Oberfläche in der Regel eine höhere absolute Anzahl an Silanolgruppen aufweisen als Fällungskieselsäuren mit einer niedrigen Oberfläche. Somit muss die Searszahl $V_2$ ins Verhältnis mit der Oberfläche der Kieselsäure gesetzt werden. Für die erfindungsgemäße Anwendung ist die CTAB-Oberfläche wichtiger als die BET-Oberfläche anzusehen, da sie ein Maß für die von außen zugängliche und damit für Vernetzungen mit dem Kautschuksystem zur Verfügung stehende Oberfläche darstellt. Wichtig ist daher der Quotient **Searszahl $V_2$/CTAB**. So wird das durch die Silanolgruppen generierte Verstärkungspotential pro eingebrachter, äußerer Oberfläche und dadurch dem Kopplungspartner zugänglicher, spezifischer Oberfläche darstellbar. Die erfindungsgemäßen Kieselsäuren zeichnen sich durch ein im Vergleich zu Fällungskieselsäuren des Standes der Technik stark erhöhtes Verhältnis der Searszahl $V_2$ zur CTAB-Oberfläche von 0,16 bis 0,28 ml/(5 $m^2$) auf. D. h. die erfindungsgemäßen Fällungskieselsäuren weisen insbesondere im Bezug auf die äußere Oberfläche eine sehr hohe Zahl an Silanolgruppen auf. Bevorzugt liegt das Verhältnis der Searszahl $V_2$ zur CTAB-Oberfläche im Bereich von 0,16 bis 0,26 ml/(5 $m^2$) und besonders bevorzugt von 0,16 bis 0,25 ml/(5 $m^2$), ganz besonders bevorzugt von 0,17 bis 0,24 ml/(5 $m^2$) und von 0,19 bis 0,24 ml/(5 $m^2$).
Die spezifische **CTAB-Oberfläche** ist vorwiegend für die Verstärkungseigenschaft der Kieselsäure von entscheidender Bedeutung (vgl. Janzen, Kraus, Rubber Chem. Technol. 44, 1287 (1971)). Das Verstärkungspotential steigt mit zunehmender CTAB-Oberfläche. So zeichnen sich die erfindungsgemäßen Fällungskieselsäuren durch eine CTAB-Oberfläche von 100 bis 200 $m^2$/g, bevorzugt von 105 bis 195 $m^2$/g, besonders bevorzugt von 110 bis 190 $m^2$/g und ganz besonders bevorzugt von 110 bis 180 $m^2$/g sowie 110 bis 175 $m^2$/g aus. In einer besonderen Ausführungsform liegt die CTAB-Oberfläche im Bereich von 100 bis 139 $m^2$/g und bevorzugt im Bereich von 105 bis 134 $m^2$/g. In einer weiteren besonderen Ausführungsform weisen die erfindungsgemäßen Fällungskieselsäuren eine CTAB-Oberfläche

von 141 bis 200 $m^2/g$ und bevorzugt von 145 bis 190 $m^2/g$ und 145 bis 175 $m^2/g$ auf.

Die spezifische **BET-Oberfläche** beschreibt den Einfluß der Kieselsäure auf das Einarbeitungsverhalten in den Kautschuk, die Rohmischungseigenschaften sowie die Vulkanisationskinetik (vgl. S. Brunauer, P. H. Emmett, E. Teller, "Adsorption of Gases in Multimolecular Layers", J. Am. Chem. Soc. 60, 309 (1938)). So zeichnen sich die erfindungsgemäßen Kieselsäuren durch eine BET-Oberfläche 90 bis 320 $m^2/g$, bevorzugt von 100 bis 250 $m^2/g$, besonders bevorzugt von 105 bis 220 $m^2/g$ sowie von 105 bis 160 $m^2/g$ und 105 bis 135 $m^2/g$ aus. In einer besonderen Ausführungsform zeichnen sich die erfindungsgemäßen Kieselsäuren durch eine BET-Oberfläche von 125 bis 250 $m^2/g$, bevorzugt 141 bis 240 $m^2/g$ und besonders von 155 bis 220 $m^2/g$ aus.

Weitere Informationen über die Oberflächenaktivität sowie das Anbindungsvermögen des Kopplungsreagenzes an die Kieselsäure, sowie die Polymer/Kieselsäure-Wechselwirkung erhält man durch die Bestimmung des **Zetapotentials**. Dabei werden die Schallwellen detektiert, die von einer wässrigen Suspension der Kieselsäure bei einem vorgegebenen pH-Wert in einem hochfrequenten elektrischen Feld ausgehen. Diese entstehen aufgrund der Oberflächenladungen der Kieselsäure und stellen somit ein Mass der für eine Reaktion zur Verfügung stehenden dissoziierten Silanolgruppen für die Kopplungsreaktion dar. Die erfindungsgemäßen Kieselsäuren können vorteilhafter Weise ein Zetapotential bei pH 5 von -12 bis -30 mV aufweisen. Bevorzugt beträgt das Zetapotential -12 bis -25 mV, besonders bevorzugt -13 bis -21 mV.

Es hat sich weiterhin herausgestellt, dass eine hohe **DBP**-Aufnahme der erfindungsgemäßen Kieselsäuren von Nutzen ist, um eine gute Dispersion zu erreichen. Dabei ist jedoch zu beachten, dass durch einen eventuellen Granulationsprozess die DBP-Zahl reduziert wird und somit eine Vergleichbarkeit von Kieselsäuren nur innerhalb einer Darreichungsform zulässig ist. Die erfindungsgemäßen Kieselsäuren können eine DBP-Zahl von 200 bis 330 g/(100 g) aufweisen. Bevorzugt beträgt die DBP-Zahl 250 bis 330 g/(100 g) für Pulver und kugelförmige Partikel (Mikrogranulat) sowie 200 bis 260 g/(100 g) für Granulate.

Neben der relativen Breite $\gamma$ der Porengrößenverteilung ist die Art die Poren, d. h. ob sie für dem Kautschuk zugänglich sind oder nicht, ein weiteres Kriterium der erfindungsgemäßen Kieselsäuren. Die Art der Poren wird durch den **BETICTAB-Quotienten** beschrieben. Ein hoher BET/CTAB-Quotient zeigt eine Mikroporosität an und somit einen hohen Anteil von "innerer" - z. B. dem kleinen Stickstoffmolekül aber nicht Kautschuk zugänglicher - Oberfläche an. Das BET/CTAB-Verhältnis der erfindungsgemäßen Kieselsäuren liegt im Bereich von 0,90 bis kleiner oder gleich 1,60, bevorzugt liegt es im Bereich von 1,08 bis 1,50, besonders bevorzugt im Bereich von 1,10 bis 1,40, ganz besonders bevorzugt im Bereich von 1,10 bis 1,30 und insbesondere bevorzugt im Bereich von 1,12 bis 1,25.

Die erfindungsgemäßen Kieselsäuren können einen Aluminiumoxidgehalt von 0,001 bis 5 Gew.-%, bevorzugt 0,001 bis 0,5 Gew.-%, besonders bevorzugt 0,01 bis 0,3 Gew.-% und ganz besonders 0,01 bis 0,15 Gew.-% aufweisen.

Die erfindungsgemäßen Fällungskieselsäuren können in verschiedenen **Darreichungsformen** vorliegen. Z. B. in Form eines Pulvers mit einer, mittels Laserbeugung bestimmtem, Partikelgröße $d_{50}$ von 1 bis 80 $\mu$m. Die pulverförmigen Partikel können eine unregelmäßige aber auch eine regelmäßige äußere Form aufweisen, d. h. sie können z. B. auch im wesentlichen kugelförmig sein. Die erfindungsgemäßen Fällungskieselsäuren können auch in Form von im wesentlichen kugelförmigen Partikeln (Mikrogranulat) mit einer, mittels der **Siebrückstandsbestimmung (Alpine)** bestimmten, Partikelgröße $d_{50}$ von 80 $\mu$m bis 1000 $\mu$m vorliegen. Im letztgenannten Fall werden die erfindungsgemäßen Kieselsäuren vorzugsweise mittels Düsenturmtrocknung, wie in EP 0937755 beschrieben, hergestellt und zeigen eine für diese Trocknungsmethode charakteristische äußere Form (siehe Abbildungen in EP 0937755). Der Inhalt der EP 0937755 wird hiermit explizit in den Inhalt der vorliegenden Anmeldung mit einbezogen. Liegen die erfindungsgemäßen Fällungskieselsäuren in Form von Granulaten ($d_{50}$ > 1000 $\mu$m (Alpine Siebrückstand)) vor, so weisen sie nach der Granulation eine Partikelgrößenverteilung derart auf, dass mittels der **Siebrückstandsbestimmung (Ro-Tap)** mindestens 80 Gew.-% der Partikel größer als 300 $\mu$m und maximal 10 Gew.-% kleiner als 75 $\mu$m sind.

Die genannten Vorzugsbereiche können unabhängig voneinander eingestellt werden.

Ein weiterer Gegenstand der vorliegenden Erfindung ist ein Verfahren zur Herstellung der erfindungsgemäßen Kieselsäuren, das die nachfolgenden Schritte umfasst:

a) Vorlage einer wässrigen Lösung eines Alkali- und/oder Erdalkalisilikats und/oder einer organischen und/oder anorganischen Base, wobei die Vorlage eine Akalizahl von 20 bis 40 aufweist,
b) Gleichzeitiges Zudosieren von Alkali- und/oder Erdalkalisilikat und Säuerungsmittel in diese Vorlage unter Rühren bei 55 bis 85 °C bis zum Viskositätsanstieg,
c) Unterbrechung der Zudosierung für 35 bis 85 Minuten, bevorzugt unter Einhaltung der am Ende von Stufe b) erreichten Temperatur,
d) weiteres gleichzeitiges Zudosieren von Alkali- und/oder Erdalkalisilikat und Säuerungsmittel bei einer Temperatur von 55 bis 85 °C, bevorzugt bei gleicher Temperatur wie am Ende von Stufe b) oder c), bis ein Feststoffgehalt von 90 bis 140 g/l erreicht ist,
g) Nachrühren der erhaltenen Suspension für 1 bis 120 Minuten bei 80 bis 98 °C,
h) Ansäuerung mit einem Säuerungsmittel auf einen pH-Wert von 2,5 bis 5,0 und

i) Filtration und Trocknung.

Der Viskositätsanstiegspunkt entspricht dabei dem Zeitpunkt bis zum starken Ansteigen der Viskosität der Fällsuspension im Fällverlauf, vgl. dazu EP 0643015.

Bevorzugt wird in mindestens einem der Schritte a) bis h), bevorzugt in mindestens einem der Schritte b) bis h), besonders bevorzugt in den Schritten b) bis h) die Fällsuspension mittels eines zusätzlichen Scheraggregats einer starken Scherung unterworfen. Bevorzugt wird in den Schritten b) und d) die Schwefelsäure direkt auf den Scherkopf des zusätzlichen Scheraggregats dosiert, so dass sofort eine intensive Einmischung der Säure in die Fällsuspension und damit eine möglichst homogene und rasche Verteilung gewährleistet ist.

Die Vorlage kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und/oder Natronlauge verwendet.

Als Säuerungsmittel wird bevorzugt Schwefelsäure verwendet. Es können aber auch andere Säuerungsmittel wie HCl, $HNO_3$, $H_3PO_4$ oder $CO_2$ eingesetzt werden.

Als Alkali- oder Erdalkalisilikat werden bevorzugt Wasserglas (Natriumsilikat-Lösung mit einem Gewichtsmodul von 2,0 bis 3,5) und/oder andere Silikate wie Kalium- oder Calciumsilikat verwendet. Besonders bevorzugt wird Wasserglas mit einem Gewichtsmodul von 3,2 bis 3,5 und einer Dichte von 1,30 bis 1,45 kg/l verwendet.

Die in der Vorlage eingestellte Alkalizahl (Schritt a) sowie die Alkalizahl während der Schritte b) und/oder d) liegt zwischen 20 und 40, bevorzugt zwischen 20 und 35, besonders bevorzugt zwischen 25 und 35.

Die Zugabe des Alkali- und/oder Erdalkalisilikats und des Säuerungsmittels während Schritt b) und/oder d) erfolgt bevorzugt derart, dass die Alkalizahl der Reaktionslösung während des jeweiligen Fällschrittes konstant gehalten wird. Unter "konstant" ist zu verstehen, dass die Alkalizahl während des jeweiligen Fällschritt um max. 2 % vom Sollwert abweichen darf.

Die in den Schritten b) und d) zugeführten Komponenten können jeweils gleiche oder unterschiedliche Konzentrationen und/oder Zuflussgeschwindigkeiten aufweisen. In einer Verfahrensvariante ist die Konzentration der eingesetzten Komponenten in beiden Schritten gleich, jedoch ist die Zuflussgeschwindigkeit der Komponenten in Schritt d) größer als in Schritt b). Besonders bevorzugt beträgt die Zuflussgeschwindigkeit der Komponenten in Schritt d) 125 -140 % der Zuflussgeschwindigkeit in Schritt b).

In Anschluss an Schritt d) wird im erfindungsgemäßen Verfahren die Alkali- und/oder Erdalkalisilikatzugabe gestoppt und, gegebenenfalls in Schritt

e) ein Säuerungsmittel mit gleicher oder veränderter Geschwindigkeit, solange weiter zugeführt, bis ein pH-Wert von 3 bis 11, bevorzugt 5 bis 11 und besonders bevorzugt 7 bis 10 erreicht ist.

Um die Konzentration des zur Reaktion zur Verfügung stehenden Alkali- und/oder Erdalkalisilikats zu variieren, kann gegebenenfalls im Schritt

f) durch Zudosierung einer oder mehreren basischen Verbindungen aus der Gruppe der Alkalihydroxide, Erdalkalihydroxide, Alkalicarbonate, Alkalihydrogencarbonate und Alkalisilikate der pH-Wert wieder auf Werte von 8 bis 14, bevorzugt 8 bis 11 und besonders 9 bis 10 angehoben werden. Bevorzugt wird Wasserglas und/oder Natronlauge verwendet.

Die Zudosierung des Säuerungsmittels in Schritt e) bzw. der basischen Verbindung in Schritt f) kann bei 40 bis 98 °C erfolgen. Bevorzugt erfolgt die Zudosierung bei 55 bis 95 °C und besonders bevorzugt bei der Temperatur, die auch für die Schritte b) oder d) gewählt wurde.

Ferner kann optional eine zusätzliche Zugabe von organischen oder anorganischen Salzen während der Schritte a) bis h) erfolgen. Dies kann in Lösung oder als Feststoff, jeweils kontinuierlich über die Zugabezeit des Alkali- und/ oder Erdalkalisilikats und des Säuerungsmittels oder als Batchzugabe durchgeführt werden. Es ist auch möglich, die Salze in einer oder beiden Komponenten zu lösen und dann gleichzeitig mit diesen zuzugeben.

Bevorzugt wird der Schritt e) zweistufig ausgeführt. Die Zuflussgeschwindigkeit des Säuerungsmittels beträgt im ersten Teilschritt bevorzugt 90 bis 110 % und im zweiten Teilschritt bevorzugt 40 bis 60 % der Zuflussgeschwindigkeit von Schritt d).

Als anorganische Salze werden bevorzugt Alkali- oder Erdalkalisalze verwendet. Insbesondere können alle Kombinationen der folgenden Ionen eingesetzt werden:

$Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $PO_3^{3-}$, $PO_4^{3-}$, $NO_3^-$, $NO_2^-$, $CO_3^{2-}$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0,01 bis 5 mol/l betragen. Bevorzugt wird als anorganisches Salz $Na_2SO_4$ verwendet.

Die Filtration, Verflüssigung (z. B. gemäß DE 2447613) und Lang- oder Kurzzeittrocknung der erfindungsgemäßen Kieselsäuren sind dem Fachmann geläufig und können z. B. in den in der Beschreibung genannten Dokumenten nachgelesen werden. Die Filtration und das Waschen der Kieselsäure erfolgt bevorzugt in der Art und Weise, dass die Leitfähigkeit des Endprodukts < 2000 $\mu$S/cm und besonders < 1300 $\mu$S/cm beträgt.

Bevorzugt wird die erfindungsgemäße Kieselsäure in einem Stromtrockner, Sprühtrockner, Etagentrockner, Bandtrockner, Drehrohrtrockner, Flash-Trockner, Spin-Flash-Trockner oder Düsenturmtrockner getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden. Eine Düsenturmtrocknung kann beispielsweise wie in EP 0937755 beschrieben durchgeführt werden. Die sprühgetrockneten Partikel können mittlere Durchmesser von über 15 $\mu$m, bevorzugt 15 bis 80 $\mu$m, gemessen mittels Laserbeugung, aufweisen. Die düsenturmgetrockneten Partikel weisen bevorzugt mittlere Partikelgrößen, gemessen mittels Siebanalyse (Alpine) von über 80 $\mu$m, insbesondere über 90 $\mu$m, bevorzugt über 200 $\mu$m auf. Der Inhalt der US 4094771 und der EP 0 937755 wird hiermit explizit in den Inhalt der vorliegenden Anmeldung mit einbezogen.

Die Granulation kann beispielsweise mit einer Walzenpresse des Typs WP 50N/75 der Fa. Alexanderwerk AG, Remscheid durchgeführt werden.

Bevorzugt wird dabei das pulverförmige Produkt ohne weitere Zugabe von Bindemitteln oder Flüssigkeiten über ein horizontales Einspeisesystem mit Einfachschnecke durch ein Vakuumsystem entlüftet und gleichmäßig zwischen die beidseitig gelagerten vertikal angeordneten Walzen eingebracht. Das Pulver wird dabei zu einer Schülpe verpresst und mittels eines Brechers in die gewünschte maximale Granulatgröße gebracht.

Optional kann die erfindungsgemäße Kieselsäure mit linearen, cyclischen und/oder verzweigten Silanen, Silazanen, Siloxanverbindungen und/oder siliziumorganischen Verbindungen modifiziert werden. Die Substituenten können beispielsweise aus -SCN, -SH, - Cl, $-NH_2$, $-OC(O)CH=CH_2$, $-OC(O)C(CH_3)=CH_2$, -S, $-S_2$, $-S_3$, $-S_4$, Aliphaten, Olefinen, Aromaten, Arylaromaten mit und ohne Hydroxy-, Amino-, Alkoxy-, Silanol-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Methacrylat- und/oder Organosilanresten bestehen.

Bevorzugt werden bifunktionelle Silane verwendet, die einerseits eine Kopplung zu dem silanolgruppenhaltigen Füllstoff und andererseits eine Kopplung zum Polymer ermöglichen. Beispiele für diese Organosiliziumverbindungen sind:

> Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, DE 10163945 und DE 10223658 beschrieben. Der Inhalt der genannten Patentschriften wird hiermit explizit in den Inhalt der vorliegenden Anmeldung mit einbezogen In einer bevorzugten Ausführungsform der Erfindung kann als Silan das Bis(3-triethoxysilylpropyl) tetrasulfan oder das Bis(3-triethoxysilylpropyl)disulfan eingesetzt werden.

Die Modifizierung der optional granulierten, ungranulierten, vermahlenen und/oder unvermahlenen Fällungskieselsäure mit einer oder mehreren der genannten Verbindungen kann in Mischungen von 0,5 bis 50 Teilen, bezogen auf 100 Teile Fällungskieselsäure, insbesondere 1 bis 15 Teile und ganz besonders 1 bis 10 Teile, bezogen auf 100 Teile Fällungskieselsäure erfolgen, wobei die Reaktion zwischen Fällungskieselsäure und den genannten Verbindungen während der Mischungsherstellung (in situ) oder außerhalb durch Aufsprühen und anschließendes Tempern der Mischung, durch Mischen des Modifizierungsagens und der Kieselsäuresuspension mit anschließender Trocknung und Temperung (zum Beispiel gemäß DE 3437473 und DE 19609619) oder gemäß des Verfahrens beschrieben in DE 19609619 oder DE 4004781 durchgeführt werden kann.

Der Kohlenstoffgehalt der modifizierten Kieselsäure beträgt 0,1 bis 20 Gew.-%, bevorzugt 0,1 bis 10 Gew.-% und besonders bevorzugt 0,5 bis 5 Gew.-%.

Ein weiterer Gegenstand der vorliegenden Erfindung ist die Verwendung von Kieselsäuren in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Die erfindungsgemäße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, kugelförmiges Produkt oder Granulat sowohl mit als auch ohne organischer Nachbehandlung eingemischt werden.

Kautschuk- und Elastomerenmischungen sind im Sinne der vorliegenden Erfindung als äquivalent zu betrachten.

Neben Mischungen, die ausschließlich die erfindungsgemäßen Kieselsäuren mit und ohne der genannten organischen Nachbehandlung als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

- Ruße: Die hierbei zu verwendenden Ruße sind nach dem Flammruß-, Furnace- oder Gasruß-Verfahren hergestellt und besitzen BET-Oberflächen von 20 bis 200 $m^2/g$, wie z. B. SAF-, ISAF-, HSAF-, HAF-, FEF- oder GPF-Ruße. Die Ruße können gegebenenfalls auch Heteroatome wie zum Beispiel Silizium enthalten.
- hochdisperse pyrogene Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-, Ca-, Ba-, Zn- und Titanoxiden vorliegen.
- weitere kommerzielle Kieselsäuren
- Synthetische Silicate, wie Aluminiumsilicat, Erdalkalisilicate wie Magnesiumsilicat oder Calciumsilicat, mit BET-Oberflächen von 20 bis 400 $m^2/g$ und Primärteilchendurchmessern von 10 bis 400 nm
- Synthetische oder natürliche Aluminiumoxide und -hydroxide
- Natürliche Silicate, wie Kaolin und andere natürlich vorkommende Siliziumdioxidverbindungen
- Glasfaser und Glasfaserprodukte (Matten, Stränge) oder Mikroglaskugeln
- Stärke und modifizierte Stärketypen
- Naturfüllstoffe, wie zum Beispiel Clays und Kieselkreide.

Das Verschnittverhältnis richtet sich auch hier nach dem zu erzielenden Eigenschaftsbild der fertigen Gummimischung. Ein Verhältnis von 5 bis 95 % zwischen den erfindungsgemäßen Kieselsäuren und den anderen oben genannten Füllstoffen (auch als Gemisch) ist denkbar und wird in diesem Rahmen auch realisiert.

In einer besonders bevorzugten Ausführungsform können 10 bis 150 Gew.-Teile Kieselsäuren, ganz oder teilweise bestehend aus der erfindungsgemäßen Kieselsäure, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben den erfindungsgemäßen Kieselsäuren, den Organosilanen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, EthylenVinylacetat-Copolymere, Ethylen-Propylen-Copolymere, gegebenenfalls auch chemische Derivate des Naturkautschuks sowie modifizierte Naturkautschuke.

Bevorzugte Synthesekautschuke sind beispielsweise bei W. Hofmann, "Kautschuktechnologie", Genter Verlag, Stuttgart 1980, beschrieben.

Für die Herstellung der erfindungsgemäßen Reifen sind insbesondere anionisch polymerisierte S-SBR-Kautschuke (Lösungs-SBR) mit einer Glasübergangstemperatur oberhalb von -50 °C sowie deren Mischungen mit Dienkautschuken von Interesse.

Die Einarbeitung dieser Kieselsäure und die Herstellung der diese Kieselsäure enthaltenden Mischungen erfolgt in der in der Gummiindustrie üblichen Art und Weise auf einem Innenmischer oder Walzwerk bei bevorzugt 80 bis 200 °C. Die Darreichungs- bzw. Einsatzform der Kieselsäuren kann sowohl als Pulver, kugelförmiges Produkt oder Granulat sein.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol und/oder Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger sind Mercaptobenzthiazole, Sulfenamide, Thiurame, Dithiocarbamate in Mengen von 0,5 bis 3 Gew.-%.

Beispiele für Cobeschleuniger sind Guanidine, Thioharnstoffe und Thiocarbonate in Mengen von 0,5 bis 5 Gew.-%. Schwefel kann üblicherweise in Mengen von 0,1 bis 10 Gew.-%, bevorzugt 1 bis 3 Gew.-%, bezogen auf Kautschuk, eingesetzt werden.

Die erfindungsgemäßen Kieselsäuren können in Kautschuken eingesetzt werden, die mit Beschleunigern und/ oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Die erfindungsgemäßen Kautschukmischungen sind insbesondere für die Herstellung von PKW- und Motorrad-Reifenlaufflächen aber auch Reifen für Nutzfahrzeuge mit erniedrigtem Rollwiderstand bei gutem Abriebswiderstand und guter Wintertauglichkeit geeignet.

Ferner eignen sich die erfindungsgemäßen Kautschukmischungen ohne Zusatz von Organosiliziumverbindungen im Blend mit einem typischen Laufflächenruß auch zur Verbesserung des Cut & Chip-Verhaltens von Bau-, Landmaschinen- und Grubenreifen (Definition und weitere Ausführungen siehe "New insights into the tear mechanism" und Referenzen hierin, präsentiert auf der Tire Technology 2003 in Hamburg von Dr. W. Niedermeier).

Die Reaktionsbedingungen und die physikalisch/chemischen Daten der erfindungsgemäßen Fällungskieselsäuren werden mit den folgenden Methoden bestimmt:

## Bestimmung des Feststoffgehalts von Filterkuchen

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 $\pm$ 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100 \%,$$

mit A = Auswaage in g und E = Einwaage in g.

## Bestimmung des Feststoffgehalts von Fällsuspensionen

Der Feststoffgehalt der Fällsuspension wird gravimetrisch nach Filtration der Probe bestimmt. 100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 $\pm$ 2 °C in einem Trockenschrank bis zur Gewichtskonstanz getrocknet. Nach Abkühlung auf Raumtemperatur wird das Gewicht der getrockneten Kieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

## Bestimmung des Feststoffgehalts von Kieselsäurespeise

Die Kieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.
Die Gewichtsabnahme in % wird vom Gerät bei Anwahl des 0-100 %-Modus direkt angezeigt. Der Feststoffgehalt ergibt sich gemäß

**Feststoffgehalt in % = 100 % - Gewichtsabnahme in %.**

**Bestimmung der Alkalizahl**

Die Alkalizahl-Bestimmung (AZ-Zahl) beschreibt den Verbrauch an Salzsäure in ml (bei 50 ml Probevolumen, 50 ml destillierten Wasser und einer verwendeten Salzsäure der Konzentration 0,5 mol/l) bei einer direkten potentiometrischen Titration von alkalischen Lösungen, bzw. Suspensionen bis zu einem pH-Wert von 8,30. Man erfasst hiermit den freien Alkaligehalt der Lösung bzw. Suspension.
Das pH-Gerät (Fa. Knick, Typ: 766 pH-Meter Calimatic mit Temperaturfühler) und die pH-Elektrode (Einstabmesskette der Fa. Schott, Typ N7680) werden mit Hilfe zweier Pufferlösungen (pH = 7,00 und pH = 10,00) bei Raumtemperatur kalibriert. Die Einstabmesskette wird in die auf 40 °C temperierte Meßlösung bzw. -suspension bestehend aus 50,0 ml Fällsuspension und 50,0 ml entionisiertem Wasser getaucht. Anschließend gibt man tropfenweise Salzsäure-Lösung der Konzentration 0,5 mol/l hinzu, bis sich ein konstanter pH-Wert von 8,30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

**Bestimmung des pH-Wertes**

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

**Bestimmung der elektrischen Leitfähigkeit**

Die Bestimmung der elektrischen Leitfähigkeit von Kieselsäure wird als 4%ige wässrige Suspension bei Raumtemperatur in Anlehnung an DIN EN ISO 787-14 durchgeführt.Gegenüber den Vorgaben dieser Norm wurden die Einwaagen verändert (4,00 g Kieselsäure auf 100 ml entionisiertes Wasser).

**Bestimmung der Feuchte**

Die Feuchte von Kieselsäure wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem AREA-meter (Fa. Ströhlein, JUWE) bestimmt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).
Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

**NDSS** **CTAB**

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0,1 µm, 47 mm Ø, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l), bei 25 °C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

**Berechnung**

$$CTAB(nicht\ feuchtekorrigiert) = \frac{V_A - V_B}{V_A} * \frac{C_{CTAB} * M_{CTAB} * T_1 * P}{E}$$

$V_A$ = Verbrauch an NDSS-Lösung in ml bei der Titration der Blindprobe

$V_B$ = Verbrauch an NDSS-Lösung in ml bei Verwendung des Filtrats

$C_{CTAB}$ = Konzentration der CTAB-Lösung in mol/l

$M_{CTAB}$ = Molmasse von CTAB = 364,46 g/mol

$T_1$ = Zugegebene Menge an CTAB-Lösung in l

P = Platzbedarf von CTAB = 578,435 $m^2/g$

E = Einwaage an Kieselsäure

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g * 100\,\%}{100\,\% - Feuchte\ in\ \%}$$

Die Feuchte der Kieselsäure wird gemäß der beschriebenen Methode "Bestimmung der Feuchte" ermittelt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

> 12,50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\,g} + K$$

mit

DBP = DBP-Aufnahme in g/(100 g)

*V* = Verbrauch an DBP in ml

*D* = Dichte von DBP in g/ml (1,047 g/ml bei 20 °C)

*E* = Einwaage an Kieselsäure in g

*K* = Korrekturwert gemäß Feuchtekorrekturtabelle in g/(100 g)

Die DBP-Aufnahme ist für die wasserfreie, getrocknete Kieselsäure definiert. Bei Verwendung von feuchten Fällungskieselsäuren ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Feuchtekorrekturtabelle für Dibutylphthalataufnahme (wasserfrei)

| % Feuchte | .% Feuchte<br>,0 | ,2 | ,4 | ,6 | ,8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

## Bestimmung der Sears-Zahl

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Silanolgruppen bestimmen.

Der Bestimmungsmethode liegen die folgenden chemischen Reaktionen zu Grunde, wobei ≡SiOH eine Silanolgruppe der Kieselsäure symbolisieren soll:

$$\equiv SiOH + NaCl \Rightarrow \equiv SiONa + HCl$$

$$HCl + KOH \Rightarrow KCl + H_2O.$$

## Durchführung

10,00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) gleichmäßig zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2,50 g der so behandelten Kieselsäure werden bei Raumtemperatur in ein 250 ml Titriergefäß eingewogen und mit 60,0 ml Methanol p. A. versetzt. Nach vollständiger Benetzung der Probe werden 40,0 ml entionisiertes Wasser zugegeben und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.

Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7,00 und 9,00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0,1 mol/l) bzw. Salzsäurelösung (0,1 mol/l) der pH-Wert auf

6,00 eingestellt. Es wird eine dynamische Titrationsart mit den folgenden Randbedingungen gewählt: Inkrementelles Titrationsvolumen $V_{min}$ = 0,05 ml bis $V_{max}$ = 1,0 ml; Wartezeit zwischen den Volumenzugaben $t_{min}$ = 2,0 s bis $t_{max}$ = 20,0 s. Der Verbrauch an KOH- bzw. HCl-Lösung in ml bis pH 6,00 entspricht $V_1$'. Danach werden 20,0 ml Natriumchlorid-Lösung (250,00 g NaCl p. A. mit entionisiertem Wasser auf 1 l aufgefüllt) zudosiert. Mit 0,1 mol/l KOH wird dann die Titration bis zum pH-Wert 9,00 durchgeführt. Der Verbrauch an KOH-Lösung in ml bis pH 9,00 entspricht $V_2$'.

Anschliessend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

**<u>Bestimmung der relativen Breite γ der Porengrößenverteilung</u>**

Nach dieser Methode wird die relative Breite γ der Porengrößenverteilung von Kieselsäure mittels der Quecksilberporosimetrie bestimmt. Die Methode basiert auf der Hg-Intrusion gemäß DIN 66133 (mit einer Oberflächenspannung 480 mN/m und einem Kontaktwinkel von 140°), wobei ein Autopore IV 9500 Gerät der Firma Micromeritics verwendet wird.

Die Kieselsäure wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Kieselsäure eingewogen und laut Anzeige mit 1 t belastet. Diese Last wird 5 s gehalten und gegebenenfalls nachgeregelt. Anschließend wird die Probe entspannt und für 4 h bei 105 ± 2 °C in einem Umlufttrockenschrank getrocknet.

Die Einwaage der Kieselsäure in den Penetrometer vom Typ 10 erfolgt auf 0,001 g genau und wird für eine gute Reproduzierbarkeit der Messung so gewählt, dass das "stem volume used", also das prozentual verbrauchte Hg-Volumen zum Füllen des Penetrometers 20 % bis 40 % beträgt. Anschließend wird das Penetrometer langsam auf 50 μm Hg evakuiert und für 5 min bei diesem Druck belassen.

Die Bedienung des Autopore-Geräts erfolgt gemäß der Bedienungsanleitung mit der Software Version IV 1.05. Jede Messung wird um eine Leermessung des Penetrometers korrigiert. Der Messbereich beträgt 0,0025 - 420 MPa, wobei mindestens 136 Gleichgewichtsmesspunkte (gerätespezifisches Kriterium von 10 s) verwendet werden (im Bereich 0,0025 - 0,25 MPa: 30 Punkte, im Bereich 0,25 - 15 MPa: 53 Punkte, 15 - 150 MPa: 40 Punkte, im Bereich 150 - 420 MPa: 13 Punkte). Ggf. fügt die Software weitere Messpunkte ein, wenn dass inkrementelle Intrusionsvolumen > 0,04 ml/g beträgt. Die Glättung der Intrusionskurve erfolgt mittels der "smooth differentials"-Funktion der Gerätesoftware.

Um die relative Breite γ der Porengrößenverteilung zu bestimmen, wird auf die Daten der negativen logarithmischen Ableitung der Intrusionskurve im Porendurchmesserbereich von 3,5 nm bis 5 μm der folgende Algorithmus angewendet:

> Der Algorithmus benutzt ein von großen Porendurchmessern kommendes, bewegliches Fenster aus drei aufeinanderfolgenden Meßpunkten der negativen logarithmischen Ableitung der Intrusionskurve und legt eine Parabel durch die Punkte. Das Maximum der Parabel wird als das gesuchte Maximum *A* bei einem Porendurchmesser *a* definiert. Es wird kontrolliert, ob der Punkt *a* im gesuchten Porendurchmesserbereich liegt und das globale Maximum der negativen logarithmischen Ableitung der Intrusionskurve darstellt. Wenn dies nicht der Fall ist, wird das Fenster um einen Punkt verschoben, erneut eine Parabel durchgelegt, und der Vorgang solange wiederholt bis beide Kriterien erfüllt sind. Dann wird *B* als *0,300 A* definiert. *b* stelle den Porendurchmesser der Kurve dar, der kleiner als *a* ist, an dem zum ersten Mal der Wert *B* erreicht wird. Schließlich wird die relative Breite γ der Porengrößenverteilung definiert als γ = (*a-b*)/(*A-B*) = *(a-b)*/*(0,7 A),* wobei *a* und *b* die Einheiten Nanometer und γ die Einheit (g nm)/ml aufweisen.

Ein typischer Kurvenverlauf der negativen logarithmischen Ableitung des kumulierten Porenvolumens *V* gemäß Gleichung 1 hinsichtlich des Porendurchmessers *x* mit i Meßpunkten und den Merkmalen *a*, *b, A* sowie *B* ist in Figur 1 dargestellt.

**Gleichung 1:**

$$\frac{dV}{d\log x} = \frac{dV}{\frac{1}{x}dx} = x\frac{dV}{dx}$$

$$x\frac{dV}{dx} \approx x\frac{\Delta V}{\Delta x}\bigg|_{\Delta x = x_i - x_{i-1}} = x_i\frac{V_i - V_{i-1}}{x_i - x_{i-1}} \approx x_i\frac{V_{i+1} - V_{i-1}}{x_{i+1} - x_{i-1}}$$

**Bestimmung des Zetapotentials**

Nach dieser Methode wird das Zetapotential von Kieselsäure bei pH 5 mittels der Elektrokinetischen Schallamplitude (ESA) bestimmt.

Dazu wird zuerst die Probe bei 105°C ± 2°C 5 h bis zur Gewichtskonstanz getrocknet und danach werden 100 ml einer Suspension mit 1 Vol.-% Kieselsäure in destillierten Wasser hergestellt. Die dazu benötigte Partikeldichte wird mittels He-Pyknometrie (DIN 66137-2) bestimmt. Die Dispergierung erfolgt für 5 Minuten mittels eines Ultraschallstabs (Bandelin Sonopuls HD2200 mit Ultraschallwandler UW2200, Power 100 %, Cycle 8 (80 % Pulse, also 0,8 s Power und 0,2 s Pause) mit Boosterhom SH 213 G Titanteller TT 13, Ø 13 mm, Eintauchtiefe 1 cm) in einem 150 ml Becherglas (Höhe 9,5 cm, Aussendurchmesser 5 cm), das für den Zeitraum der Beschallung im Eisbad gekühlt wird.

Die auf Raumtemperatur gebrachte Suspension wird mit einem Magnetrührer gerührt und über eine Schlauchpumpe durch den PPL-80 Sensor des ESA-8000 Geräts der Firma Matec gepumpt. Es erfolgt die automatische potentiometrische Titration bei Raumtemperatur mit 5 molarer $HNO_3$ und einer "delay time" von 30 s bis zu einem pH-Wert von 5. Sollte der Anfangs pH-Wert der Suspension < 5 sein, so erfolgt die Titration mit 5 molarer NaOH Lösung bis zu einem pH-Wert von 5. Die Auswertung erfolgt mittels der Gerätesoftware Version pcava 5.94.

Es wird das Zetapotenzial bei pH 5 berechnet:

$$\zeta = \frac{ESA \cdot \eta}{\phi \cdot \Delta\rho \cdot c \cdot |G(\alpha)| \cdot \varepsilon}$$

| | |
|---|---|
| ζ | *Zetapotential [$10^{-3}$ V]* |
| *ESA* | *Elektrokinetische Schallamplitude bei pH 5 [Pa m/V]* |
| ϕ | *Volumenfraktion (0,01)* |
| Δρ | *Dichtedifferenz zwischen den Partikeln (s.o.) und der Flüssigkeit (0,997 kg/l)* |
| *c* | *Schallgeschwindigkeit in der Suspension (1490 m/s)* |
| η | *Viskosität der Flüssigkeit (0,89 cP minus 2 % pro °C Abweichung von 25 °C)* |
| ε | *Dielektrizitätskonstante der Suspension (78,36 As/Vm)* |

|*G*(α)| *Trägheitskorrektur (Funktion des Partikelradius und der Dichte, s. Handbuch)* Zur Bestimmung ist der Wert des mittleren Partikelradius notwendig, welcher anhand der obigen, mit Ultraschall behandelten Suspension mittels dynamischer Lichtstreuung bestimmt wird. Dazu wird das Horiba LB-500 Gerät verwendet (Radius = 0,5 x Mean der volumengewichteten Partikelverteilung, Calculation Level = 50, Küvettendicke 1 cm, Optisches Modell: Flüssigkeitsbrechungsindex Real = 1,333; Material Brechungsindex Real = 1,45; Imaginär = 0,01).

**Bestimmung der Partikelgröße mittels Laserbeugung**

Die Anwendung der Laserbeugung zur Bestimmung von Teilchengrößen von Pulvern basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.

Die Probenvorbereitung und Messung (Spülen des Moduls, ect.) erfolgt im Fall hydrophiler Fällungskieselsäure mit VE Wasser, im Fall nicht ausreichend mit Wasser benetzbarer Fällungskieselsäure mit reinem Ethanol.

Vor Beginn der Messung lässt man das Laserbeugungsgerät LS 230 (Fa. Coulter) und das Flüssigkeitsmodul (Small Volume Module Plus, 120 ml, Fa. Coulter) 2 h warmlaufen, spült das Modul dreimal mit VE Wasser, kalibriert es und spült im Falle hydrophober Fällungskieselsäuren dreimal mit Ethanol.

In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,332 (1,359 für Ethanol); Material Brechungsindex Real = 1,46; Imaginär = 0,1; Formfaktor 1. Zusätzlich wählt man in diesem Dateifenster die folgenden Punkte aus: Offsetmessung, Justieren, Hintergrundmessung, Messkonz. einstellen, Probeninfo eingeben, Messinfo eingeben, Messzeit 60 s, Anzahl Messungen 1, ohne PIDS Daten, Größenverteilung. Die Pumpengeschwindigkeit wird am Gerät auf 30 % eingestellt.

Es erfolgt die Zugabe der homogenen Suspension von 1 g Kieselsäure in 40 ml VE Wasser mit einer 2 ml Einwegpipette in das Flüssigkeitsmodul des Gerätes in der Art, dass eine konstante Konzentration mit einer Lichtabsorption von 8 bis 12 % erreicht wird und das Gerät "OK" meldet. Die Messung erfolgt bei Raumtemperatur. Aus der Rohdatenkurve berechnet die Software des Gerätes LS 230 auf Basis der Volumenverteilung unter Berücksichtigung der Mie-Theorie und der optischen Modellparameter (.rfd-Datei) die Teilchengrößenverteilung und den d50-Wert (Medianwert).

## Bestimmung des Siebrückstands (Alpine)

Bei dieser Siebrückstandsbestimmung handelt es sich um eine Luftstrahlsiebung in Anlehnung an DIN ISO 8130-1 mittels eines Luftstrahlsiebgeräts S 200 der Fa. Alpine. Zur Bestimmung des $d_{50}$-Werte von Mikrogranulaten und Granulaten werden dazu auch Siebe mit einer Maschenweite > 300 $\mu$m eingesetzt. Um den $d_{50}$-Wert zu ermitteln, müssen die Siebe so gewählt werden, dass sie eine Partikelgrößenverteilung liefern, aus der der $d_{50}$-Wert gemäß Figur 2 bestimmt werden kann. Die grafische Darstellung und Auswertung erfolgt analog zu ISO 2591-1, Kapitel 8.2.

Unter dem $d_{50}$-Wert ist der Partikeldurchmesser in der kumulativen Partikelgrößenverteilung zu verstehen, bei der 50% der Partikel einen geringeren oder gleichen Partikeldurchmesser aufweisen als/wie die Partikel mit dem Partikeldurchmesser des $d_{50}$-Wertes.

## Bestimmung des Siebrückstands (Ro-Tap)

Mit dieser Methode wird der Anteil gröberer Partikel (> 300 $\mu$m) und der Anteil feinerer Partikel (< 75 $\mu$m) von Granulaten mittels Siebung bestimmt.

Es werden eine Siebpfanne, ein Analysensieb mit Metallsiebgewebe (DIN ISO 565 T.2, Nennmaschenweite 75 $\mu$m), ein Analysensieb mit Metallsiebgewebe (DIN ISO 565 T.2, Nennmaschenweite 150 $\mu$m), sowie ein Analysensieb mit Metallsiebgewebe (DIN ISO 565 T.2, Nennmaschenweite 300 $\mu$m) mit jeweils 200 mm Siebdurchmesser verwendet. Der Siebturm wird in der genannten Reihenfolge in eine Analysensiebmaschine Ro-Tap B 8260 mit Zeitschaltuhr der Firma Tyler eingebracht und eine homogene Probenmenge von 100,00 g der Kieselsäuregranulate wird auf das oberste Sieb überführt. Der Siebdeckel und der Klopfer werden aufgesetzt und die Siebung erfolgt mit einer Kreis- und Klopfbewegung für 5 min.

Die Siebrückstände (Ro-Tap) werden bestimmt gemäß
Siebfraktion (Ro-Tap, < 75 $\mu$m) in % = $(A_S/E)$* 100 %, sowie
Siebrückstand (Ro-Tap, > 300 $\mu$m) in % = $(A_{300}/E)$* 100 %, mit
$A_S$ = Auswaage des Rückstands in der Siebpfanne in g,
$A_{300}$ = Auswaage des Rückstands auf dem Sieb mit 300 $\mu$m Nennwaschenweite in g und E = Einwaage in g.

## Bestimmung des Kohlenstoffgehalts

Die Bestimmung des Kohlenstoffgehaltes an Kieselsäuren erfolgt mittels eines Elementanalysators LECO CS 244. Dabei wird Kieselsäure in einen Keramiktiegel eingewogen, mit Verbrennungszuschlägen versehen und in einem Induktionsofen unter einem Sauerstoffstrom erhitzt. Der vorhandene Kohlenstoff wird hierbei zu $CO_2$ oxidiert. Diese Gasmenge wird über Infrarotdetektoren quantifiziert.

Vor der eigentlichen Messung wird eine Kalibrierung des Geräts mit geeignetem Referenzmaterial (z. B. Wolframcarbid mit 6,17 Gew.-% Kohlenstoff) durchgeführt. Für Kieselsäuren werden 150 bis 200 mg auf 1 mg genau in einen Keramiktiegel eingewogen. Das Probenmaterial wird mit 1 g Lecocel II (Pulver einer Wolfram-Zinn(10%ige)-Legierung) und 0,7 g Eisenspäne überdeckt. Anschließend wird der Tiegel mit einem Deckel verschlossen. Der Induktionsofen wird auf maximale Leistung eingestellt und 10 s mit Sauerstoff gespült. Nachdem dann der Tiegel in den Induktionsofen eingesetzt wurde, wird die automatische Messung und Auswertung gestartet. Pro Probe werden drei Bestimmungen durchgeführt. Das Ergebnis bezieht sich auf die Originalsubstanz und wird in Gew.-% angegeben.

## Bestimmung des Aluminiumoxidgehalts

Die Bestimmung des Aluminiumoxidgehalts erfolgt in Anlehnung an DIN EN ISO 3262-18 mittels Flammenatomabsorptionsspektroskopie bei einer Wellenlänge von 309,3 nm.

Ca. 20 g einer Kieselsäure werden auf 0,01 g genau in einen Platintiegel eingewogen und mit destillierten Wasser befeuchtet. 1 ml konz. Flusssäure (40 %, p.a.) wird zugefügt und die Mischung wird in einem Sandbad bis zum Abrauchen erhitzt. Nach und nach wird Salpetersäure tropfenweise zugegeben, bis die Kieselsäure komplett aufgelöst ist. Nach Eindampfen bis zur Trockene wird der Rückstand in 3 ml konz. Salzsäure gelöst. Die abgekühlte Lösung wird quantitativ in einen 100 ml-Messbecher überführt und dort auf 100 ml mit destilliertem Wasser aufgefüllt.

Die so hergestellte Lösung wird gemäß der Bedienungsanleitung in einem Flammenatomabsorptionsspektrometer untersucht (Wellenlänge: 309,3 nm, Slit S: 0,7 nm, Gasstrom: Acetylen/$N_2O$).

Die Bestimmung des Aluminiumoxidgehaltes erfolgt an der Originalprobe, der Gehalt wird jedoch auf die für 2 h bei 1000 °C geglühte Probe bezogen:

$$\% Al_2O_{3\,\text{bezogen auf geglühte Substanz}} = \frac{\% Al_2O_{3\,\text{bezogen auf Originalsubstanz}} \times 100}{100\,\% - \text{Glühverlust in } \%}.$$

**Bestimmung des Dispersionskoeffizienten**

Der Dispersionskoeffizient läßt sich mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820, bestimmen.

Alternativ kann der Dispersionskoeffizient auch mittels dem DIAS Verfahren (lichtoptisch) am Deutschen Institut für Kautschuktechnologie in Hannover bestimmt werden (siehe H. Geisler, DIK aktuell, 1. Ausgabe (1997) und Medalia, Rubber Age, April 1965).

Der beste erreichbare Dispersionsgrad liegt bei 100 %, der theoretisch schlechteste würde demnach bei 0 % liegen. Kieselsäuren mit einem Dispersionskoeffizienten von größer oder gleich 90 % sind als hoch dispersibel (HD) einzustufen.

Erläuterung zur Bestimmung des Dispersionskoeffizienten mittels Oberflächentopographie:

$$\text{Dispersionskoeffizient} = 100\,\% - \frac{(\text{Summe der Peakgrundflächen}) \bullet 10000\,\% \bullet \text{Medaliafaktor}}{\text{Füllstoffvolumen} \bullet (\text{untersuchte Gesamtfläche})}\,\%$$

$$\text{Medaliafaktor} = \frac{\frac{\text{Füllstoffvolumen}}{100\,\%} + 0{,}78}{2}$$

Dispersionskoeffizient in %
Summe der Peakgrundflächen (Maß für die Rauheit) in $mm^2$
Füllstoffvolumen in %
untersuchte Gesamtfläche in $mm^2$

Die folgenden Beispiele sollen die Erfindung näher erläutern, ohne ihren Umfang zu beschränken.

**Beispiel 1**

In einem Reaktor aus Holz (Höhe 3,80 m, Innendurchmesser 5,50 m) mit Schrägboden, MIG-Schrägblattrührsystem und Ekato Fluid-Scherturbine werden 41,6 $m^3$ Wasser sowie 4,4 $m^3$ Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 76 °C für 41 min 9,13 $m^3$/h des oben genannten Wasserglases und ca. 680 l/h Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium eine AZ-Zahl von 30,0 +/- 0,3 herrscht. Beide Rohstoffzugaben werden gestoppt und die erhaltene Suspension wird 60 min bei der erreichten Temperatur von 78 °C intensiv gerührt und geschert. Schließlich werden unter weiterhin intensiven Rühren und Scheren für 46 min 12,50 $m^3$/h des oben genannten Wasserglases und ca. 930 l/h der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Nach der Zugabe ist eine Temperatur von 81 °C erreicht. Die Wasserglaszugabe wird gestoppt, und die Schwefelsäure mit 930 l/h weiterzugeführt, bis ein pH von 9,0 (gemessen bei Raumtemperatur) erreicht ist. Die Suspension wird innerhalb von 20 min mit offenem Dampf auf 90 °C aufgeheizt und bei dieser Temperatur für 60 min intensiv gerührt und geschert. Im direkten Anschluss wird die Schwefelsäurezugabe mit 930 l/h wieder aufgenommen, bis ein pH-Wert von 7,0 (gemessen bei Raumtemperatur) erreicht ist. Mit einer Schwefelsäuredosierung von 500 l/h wird der End-pH-Wert der Suspension von 3,9 (gemessen bei Raumtemperatur) eingestellt.

Die erhaltene Suspension wird mit einer Membranfilterpresse filtriert und der Filterkuchen mit Wasser gewaschen. Der Filterkuchen mit 23 Gew.-% Feststoffgehalt wird anschließend mit einem Spin-Flash-Trockner getrocknet und walzengranuliert. Die Walzengranulation erfolgt mit einer Walzenpresse des Typs WP 50N/75 der Fa. Alexanderwerk AG. Dabei wird das pulverförmige Produkt ohne weitere Zugabe von Bindemitteln oder Flüssigkeiten über ein horizontales Einspeisesystem mit Einfachschnecke (Drehzahl 86 U/min) durch ein Vakuumsystem entlüftet (Unterdruck 0,3 bar) und

gleichmäßig zwischen die beidseitig gelagerten, vertikal angeordneten Walzen eingebracht. Bei einer Drehzahl von 11 U/min und einem Druck von 14 bar wird das Pulver zu einer Schülpe verpresst und mittels eines Brechers (Maschenweite 8 mm) zerkleinert. Der Feinanteil wird mit einem Vibrationssieb abgesiebt (Maschenweite 1,2 mm) und in die Pulveraufgabe zurückgeführt.

Die physikalisch-chemischen Daten einer repräsentativen Probe des erhaltenen granulierten Produkts (Beispiel 1b) ist in Tabelle 1 aufgelistet.

**Beispiel 2**

In einem Doppelmantel-Reaktor (Höhe 1,60 m, Innendurchmesser 1,60 m) aus rostfreiem Edelstahl mit Klöpperboden, MIG-Schrägblattrührsystem und Ekato Fluid-Scherturbine werden 1200 l Wasser sowie 172,4 kg Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 65 °C für 35 min 5,85 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium eine AZ-Zahl von 30,0 +/- 0,3 herrscht. Beide Rohstoffzugaben werden gestoppt und die erhaltene Suspension wird 60 min bei 65 °C intensiv gerührt und geschert. Schließlich werden unter weiterhin intensiven Rühren und Scheren bei 65 °C für 50 min 8,00 kg/min des oben genannten Wasserglases und ca. 0,90 kg/min der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Die Wasserglaszugabe wird gestoppt und die Schwefelsäure mit 0,90 kg/min weiterzugeführt, bis ein pH von 9,0 (gemessen bei Raumtemperatur) erreicht ist. Die Suspension wird innerhalb von 40 min mit indirektem Dampf über die Doppelmantelheizung auf 90 °C aufgeheizt und bei dieser Temperatur für 60 min intensiv gerührt und geschert. Im direkten Anschluss wird die Schwefelsäurezugabe mit 0,90 kg/min wieder aufgenommen, bis ein pH-Wert von 7,0 (gemessen bei Raumtemperatur) erreicht ist. Mit einer Schwefelsäuredosierung von 0,45 kg/min wird der End-pH-Wert der Suspension von 3,1 (gemessen bei Raumtemperatur) eingestellt.

Die erhaltene Suspension wird mit einer Membranfilterpresse filtriert und der Filterkuchen mit Wasser gewaschen. Der Filterkuchen mit 23 Gew.-% Feststoffgehalt wird anschließend mit Wasser und der oben genannten Schwefelsäure und einem Dissolver verflüssigt. Die Kieselsäurespeise mit 21 Gew.-% Feststoffgehalt und einem pH-Wert von 4,5 wird anschließend unter Ammoniakdosierung so sprühgetrocknet, dass sich im Endprodukt ein pH-Wert, gemessen als 5%ige Suspension, von 5,9 einstellt und analog zu Beispiel 1 bei einer Drehzahl von 13 U/min und einem Druck von 20 bar granuliert.

Die physikalisch-chemischen Daten einer repräsentativen Probe des erhaltenen pulverförmigen (Beispiel 2a) und des granulierten Produkts (Beispiel 2b) sind in Tabelle 1 aufgelistet.

**Beispiel 3**

In einem Doppelmantel-Reaktor (Höhe 1,60 m, Innendurchmesser 1,60 m) aus rostfreiem Edelstahl mit Klöpperboden, MIG-Schrägblattrührsystem und Ekato Fluid-Scherturbine werden 1205 l Wasser sowie 172,4 kg Wasserglas (Dichte 1,348 kg/l, 27,0 Gew.-% $SiO_2$, 8,05 Gew.-% $Na_2O$) vorgelegt. Anschließend werden unter intensiven Rühren und Scheren bei einer Temperatur von 60 °C für 45 min 5,85 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Scherturbine und wird so geregelt, dass in dem Reaktionsmedium eine AZ-Zahl von 30,0 +/- 0,3 herrscht. Beide Rohstoffzugaben werden gestoppt und die erhaltene Suspension wird 60 min bei 60 °C intensiv gerührt und geschert. Schließlich werden unter weiterhin intensiven Rühren und Scheren bei 60 °C für 43 min 8,00 kg/min des oben genannten Wasserglases und ca. 0,90 kg/min der oben genannten Schwefelsäure gleichzeitig zudosiert. Die Schwefelsäuredosierung wird erneut so geregelt, dass in dem Reaktionsmedium eine AZ-Zahl von 30,0 +/- 0,3 herrscht. Die Wasserglaszugabe wird gestoppt und die Schwefelsäure mit 0,90 kg/min weiterzugeführt, bis ein pH von 9,0 (gemessen bei Raumtemperatur) erreicht ist. Die Suspension wird innerhalb von 40 min mit indirektem Dampf über die Doppelmantelheizung auf 90 °C aufgeheizt und bei dieser Temperatur für 60 min intensiv gerührt und geschert. Im direkten Anschluss wird die Schwefelsäurezugabe mit 0,90 kg/min wieder aufgenommen, bis ein pH-Wert von 7,0 (gemessen bei Raumtemperatur) erreicht ist. Mit einer Schwefelsäuredosierung von 0,45 kg/min wird der End-pH-Wert der Suspension von 3,2 (gemessen bei Raumtemperatur) eingestellt.

Die erhaltene Suspension wird mit einer Membranfilterpresse filtriert und der Filterkuchen mit Wasser gewaschen. Der Filterkuchen mit 21 Gew.-% Feststoffgehalt wird anschließend mit Wasser und der oben genannten Schwefelsäure und einem Dissolver verflüssigt. Die Kieselsäurespeise mit 18 Gew.-% Feststoffgehalt und einem pH-Wert von 4,1 wird anschließend unter Ammoniakdosierung so sprühgetrocknet, dass sich im Endprodukt ein pH-Wert, gemessen als 5%ige Suspension, von 5,6 einstellt und analog zu Beispiel 1 bei einer Drehzahl von 12 U/min und einem Druck von 18 bar granuliert. Die physikalisch-chemischen Daten einer repräsentativen Probe des erhaltenen pulverförmigen (Beispiel 3a) und des granulierten Produkts (Beispiel 3b) sind in Tabelle 1 aufgelistet.

Tabelle 1:

| | Einheit | Beispiel 1b | Beispiel 2a | Beispiel 2b | Beispiel 3a | Beispiel 3b |
|---|---|---|---|---|---|---|
| Darreichungsform | | Granulat | Pulver | Granulat | Pulver | Granulat |
| Feuchte | % | 5,7 | 5,6 | 5,8 | 5,6 | 5,4 |
| pH-Wert | - | 7,2 | 5,9 | 5,9 | 5,6 | 5,8 |
| Leitfähigkeit | µS/cm | 400 | 280 | 260 | 570 | 580 |
| BET-Oberfläche | $m^2/g$ | 125 | 149 | 155 | 205 | 203 |
| CTAB-Oberfläche | $m^2/g$ | 113 | 133 | 134 | 171 | 173 |
| DBP-Aufnahme | g/(100 g) | 244 | 271 | 219 | 263 | 233 |
| Searszahl $V_2$ | ml/(5 g) | 26,3 | 26,7 | 27,1 | - | 29,6 |
| Searszahl $V_2$/CTAB | ml(5 $m^2$) | 0,233 | 0,201 | 0,202 | - | 0,171 |
| BET/CTAB | - | 1,11 | 1,12 | 1,16 | 1,20 | 1,17 |
| Zetapotential | mV | -17,3 | - | -15,5 | - | -16,3 |
| relative Breite $\gamma$ der Porengrößenverteilung | (g nm)/ml | 4,6 | 7,0 | 7,1 | 5,0 | 5,2 |
| Siebrückstand (Ro-Tap, > 300 µm) | % | 88,2 | - | 88,9 | - | 92,4 |
| Siebfraktion (Ro-Tap, < 75 µm) | % | 4,5 | - | 4,5 | - | 2,6 |

**Anwendungstechnische Beispiele**

Beispiele 1b, 2b, 3b: Herstellung der Kautschukmischungen und Vulkanisate

Allgemeine Durchführungsvorschrift:

Die für die Gummimischungen verwendete Rezeptur (Standard Green Tire) ist in der folgenden Tabelle 2 angegeben. Dabei bedeutet die Einheit "phr" Gewichtsanteile bezogen auf 100 Teile des eingesetzten Rohkautschuks.

Tabelle 2:

| **Standard-GreenTire** | | | |
|---|---|---|---|
| Substanz | phr | Artikelbezeichnung | Firma |
| **1.Stufe** | **Grundrischen** | | |
| Buna VSL 50125- | 96 | S-SER; ölverstreckt (siehe Text) | Lanxess Europe GmbH & Co. KG; 51369 Leverkusen; Deutschland |
| Buna CB 24 | 30 | cis-1,4-BR (siehe Text) | Lanxess Europe GmbH & Co. KG; 51369 Leverkusen; Deutschland |
| erfindungsgemäße Kieselsäue (KS) | 80 | | |
| X 50-S | 12,8 | Si 69 (Bis(3-triethoxysilylpropyl) tetrasulfan)/Carbon Black des Typs N 330: 50% / 50% | Degussa AG; Frankfut an Main; Deutchland |
| ZnO, RS RAL 844 C | 30 | ZnO | Arnspeger Chemikalien GmbH; 50858 Köln; Deutschland |

(fortgesetzt)

| Standard-GreenTire | | | |
|---|---|---|---|
| EDENOR ST1 GS | 2,0 | Palmitinsteerinsäue; Stearin " Jodzahl 1" | Caldic Deutscland GMbH & Co. KG; 40231 Düsseldorf; Deutschland |
| Naftolen ZD | 10,0 | aromatisches Weichmacheröl | Chemetall GmbH; 60487 Frankfurt a.M; Deutschland |
| Vulkanox 4020 / LG | 1,5 | N-(1,3-dimethylbutyl)-N-phenyl-p-phenylendiamin (6PPD) | Rhein Chemie Rheinau GmbH; 68219 Mannheim Rheinau; Deutschland |
| Protektor G3108 | 1,0 | Mischung von raffinierten Kohlenwasserstoffwachsen | Paramelt BV; 706875 Paramelt BV; NL 1704 RJ Heerhugowaard; Niederlande |
| **2.Stufe** | **Zwicken / renill Stufe** | | |
| Batch Stufe 1 | | | |
| **3.Stufe** | **Fertigmischen** | | |
| Batch Stufe 2 | | | |
| Vulkacit D | 2,0 | N,N'-Diphenylguaridin (DPG) | Rhein Chemie Rheinau GmbH; 68219 Mannheim Rheinau; Deutschland |
| Vulkacit CZ/EG-C | 1,5 | N-Cyclohexl-2-benzothiazolsulfenamid (CBS) | Rhein Chemie Rheinau GmbH; 68219 Mannheim Rheinau; Deutschland |
| Perkacit TBZTD | 0,2 | Tetrabenzylthiuramdisulfid (TBzTD) | Flexsys N.V./S.A, Woluwe Garden; B-1932 St. Sevens Woluwe; Belgien |
| Mahlschwefel | 1,5 | Schwefel fein verteilt Ph Eur, BP | Merck kGaA; 64271 Darmstadt; Deutschland |

Bei dem Polymer VSL 5025-1 handelt es sich um ein in Lösung polymerisiertes SBR-Copolymer der Bayer AG (heutige Lanxess Europe GmbH & Co. KG) mit einem Styrolgehalt (mittels UV Spektroskopie) von 25 +/- 2 Gew.-% und einem Vinylgehalt (mittels IR Spektroskopie) von ca. 50 +/- 4 Gew.-%. Das Copolymer enthält ca. 27 Gew.-% aromatisches Mineralöl (25,8 - 28,8 Gew.-%) und weist eine Mooney Viskosität (ASTM D 1646) von etwa 50 +/- 5 MU auf.

Bei dem Polymer Buna CB 24 handelt es sich um ein cis-1,4-Polybutadien (Titantyp) der Bayer AG (heutige Lanxess Europe GmbH & Co. KG) mit einem cis-1,4-Gehalt (mittels IR-Spektroskopie) von mind. 96 Gew.-% und einer Mooney Viskosität (DIN 53523) von etwa 45 MU (39 MU - 49 MU).

**Tabelle 3:**

| **Miechvorschrift** | |
|---|---|
| **1. Stufe** | **Innenmischer GK 1.5N, Füllgrad 0.73,<br>70 U/min, Durchflußtemperetur 70 °C,<br>Stempeldruck 5,5 bar** |
| **0,0' - 0,5'** | **Polymere** |
| **0,5' - 1,5'** | **1/3 KS, X 50-S; bei 1,5' säubern** |
| **1,5' - 2,5'** | **1/3 KS; bei 2,5' säubern** |
| **2,5' - 3,5'** | **1/3 KS, restliche Bestandteile; bei 3,5' säubern** |
| **3,5' - 5,0'** | **mischen, ggf. Drehzahlveriation erforderlich, um die Auswurftemperatur zu erreichen** |
| **5,0'** | **Batch ausfahren (Batchtemperatur 145 °C - 155 °C) und auf die Walze geben:** |

(fortgesetzt)

| Miechvorschrift | |
|---|---|
| | Fell ausziehen |
| 24 h Zwischenlagerung bei Raumtemperatur zur Stufe 2 | |
| | |
| 2. Stufe | Innenmischer GK 1.5N, Füllgrad 0,71, 80 U/min, Durchflußtemperatur 80 °C, Stempeldruck 5,5 bar |
| 0,0' - 2,0'<br>2,0' - 5,0'<br>5,0' | Batch Stufe 1 plastizieren<br>Batchtemperatur 150 °C halten durch Drehzahlveriatlon<br>Batch ausfahren (Batchtemperatur 145 °C - 155 °C) und auf die Walze geben:<br>Fell ausziehen |
| 4 h Zwischenlagerung bei Raumtemperatur zur Stufe 3 | |
| | |
| 3. Stufe | Innenmischer GK 1.5N, Füllgrad 0,69,<br>40 U/min, Durchflußtemperatur 50 °C,<br>Stempeldruck 5,5 bar |
| 0,0' - 2,0'<br>2,0' | Batch Stufe 2, Beschleuniger, Schwefel<br>Batch ausfahren (Batchtemperatur 90 °C - 110 °C) und auf die Walze geben:<br>3*links, 3*rechts einschneiden, umlegen,<br>5*eng, 5*weit stürzen,<br>Fell ausziehen |
| 12 h Zwischenlagerung bei Raumtemperatur bis zum Beginn der Prüfungen | |

Das allgemeine Verfahren zur Herstellung von Kautschukmischungen und deren Vulkanisate ist in dem folgendem Buch beschrieben: "Rubber Technology Handbook", W. Hofmann, Hanser Verlag 1994.

Die Vulkanisationszeit für die Prüfkörper beträgt bei 165 °C jeweils 15 min für Beispiel 1b und 2b sowie 20 min für Beispiel 3b.

Die gummitechnische Prüfung erfolgt gemäß den in Tabelle 4 angegebenen Prüfmethoden.

Tabelle 4:

| Physikalische Testung | Norm / Bedingungen |
|---|---|
| Vulkameterprüfung, 165 °C,<br>RPA, 1,6 Hz, 42 % Amplitude<br>Dmax (dNm)<br>Dmax - Dmin (dNm) | DIN 53529/3, ISO 6502 |
| Vulkameterprüfung, 165 °C,<br>0,5 ° Auslenkung<br>Rheometer MDR<br>t 90 % | DIN 53529/3, ISO 6502 |
| Zugversuch am Ring, 23 °C<br>Spannungswert (MPa) | DIN 53504, ISO 37 |
| Shore-A-Härte, 23 °C (SH) | DIN 53 505 |
| Ball Rebound (%), 60 °C | DIN EN ISO 8307,<br>Fallhöhe 500 mm,<br>Stahlkugel, d= 19 mm, 28 g |
| DIN-Abrleb, 10 N Kraft ($mm^3$) | DIN 53 516 |

(fortgesetzt)

| Physikalische Testung | Norm / Bedingungen |
|---|---|
| Dispersionskoeffizient (%) | siehe Text |
| Viskoelastische Eigenschaften,<br>50 N Vorkraft und 25 N Amplitudenkraft,<br>Temperferzelt 5 min,<br>Meßwertaufnahme nach 30 s Prüfzelt<br>Komplexer Modul E* (MPa)<br>Verlustfaktor tan δ (-) | DIN 53 513, ISO 2856 |

In den nachfolgend aufgeführten Tabellen sind die anwendungstechnischen Daten der Beispiele 1b, 2b und 3b, die gemäß den Tabellen 2 - 4 compoundiert und getestet wurden, dargestellt.

**Tabelle 5:**

| | | Ultrasil VN 2 GR | Beispiel 1b |
|---|---|---|---|
| Dmax | dNm | 44,9 | 48,1 |
| Dmax - Dmin | dNm | 38,6 | 40,8 |
| t 90 % | min | 6,6 | 5,0 |
| t 80 % - t 20 % | min | 2,4 | 1,7 |
| Spannungswert 300 % | MPa | 11,6 | 12,5 |
| Shore-A-Härte | SH | 65 | 64 |
| DIN-Abrieb | $mm^3$ | 116 | 113 |
| Ball-Rebound | % | 58,6 | 66,0 |
| E*, 60 °C, 16 Hz | MPa | 9,7 | 9,1 |
| tan δ, 60 °C, 16 Hz | - | 0,124 | 0,103 |

**Tabelle 6:**

| | | Ultrasil 7000 GR | Beispiel 2b |
|---|---|---|---|
| Dmax | dNm | 43,6 | 47,8 |
| Dmax - Dmin | dNm | 35,8 | 40,1 |
| t 90 % | min | 6,4 | 5,5 |
| t 80 % - t 20 % | min | 2,5 | 1,8 |
| Spannungswert 300 % | MPa | 10,1 | 12,4 |
| Shore-A-Härte | SH | 65 | 66 |
| DIN-Abrieb | $mm^3$ | 125 | 116 |
| Ball-Rebound | % | 60,6 | 64,5 |
| E*, 60 °C, 16 Hz | MPa | 10,7 | 10,3 |
| tan δ, 60 °C, 16 Hz | - | 0,155 | 0,127 |

**Tabelle 7:**

| | | Ultrasil 7005 | Beispiel 3b |
|---|---|---|---|
| Dmax | dNm | 46,9 | 48,9 |

(fortgesetzt)

| | | Ultrasil 7005 | Beispiel 3b |
|---|---|---|---|
| Dmax - Dmin | dNm | 37,2 | 39,0 |
| t 90 % | min | 8,4 | 7,1 |
| t 80 % - t 20 % | min | 3,7 | 3,0 |
| Spannungswert 300 % | MPa | 10,8 | 12,6 |
| Shore-A-Härte | SH | 68 | 69 |
| DIN-Abrieb | $mm^3$ | 107 | 103 |
| Ball-Rebound | % | 58,8 | 58,9 |
| E*, 60 °C, 16 Hz | MPa | 10,9 | 11,8 |
| tan $\delta$, 60 °C, 16 Hz | - | 0,138 | 0,133 |

In der Standard Green Tire Rezeptur wurden als Referenzen kommerziell erhältliche Kieselsäuren der Degussa AG verwendet, die im selben spezifischen CTAB-Oberflächenbereich liegen (siehe Tabelle 8), wie die jeweils zu testende erfindungsgemäße Kieselsäure. Somit ist sichergestellt, daß die gummitechnischen Ergebnisse gut vergleichbar sind.

**Tabelle 8:**

| | Einheit | Ultrasil VN 2 GR | Ultrasil 7000 GR | Ultrasil 7005 |
|---|---|---|---|---|
| BET-Oberfläche | $m^2/g$ | 127 | 172 | 180 |
| CTAB-Oberfläche | $m^2/g$ | 129 | 158 | 171 |
| relative Breite $\gamma$ der Porengrößenverteilung | (g nm)/ml | 3,8 | 3,4 | 3,5 |

Bei dem Vergleich der Rohmischungsdaten im MDR und im RPA zeichnen sich alle drei erfindungsgemäßen Kieselsäuren durch ein stark erhöhtes maximales Drehmoment Dmax aus, welches eine erhöhte Vernetzungsdichte (Dmax - Dmin) zur Folge hat. Dadurch werden klare Vorteile in der Verstärkung erzielt, die sich in einem erhöhten Spannungswert 300 % und einem verringertem DIN-Abrieb bei jeweils vergleichbarer Shore-A-Härte auswirken. Desweiteren sind die Vernetzungsgeschwindigkeiten t 80 % - t 20 % vorteilhafter Weise bei allen Beispielen in den Tabellen 5 bis 7 erhöht. Deutlich sind auch die Vorteile der erfindungsgemäßen Fällungskieselsäuren in den dynamischen Daten zu erkennen. Hier erhält man Verbesserungen hinsichtlich des Hystereseverlusts, was an den erhöhten Ball-Rebound und den reduzierten tan $\delta$ Werten zu erkennen ist. Dies läßt den Schluß zu, daß diese neuen Fällungskieselsäuren, eingearbeitet in einem Reifenlaufflächencompound, einen verbesserten Rollwiderstand und damit am Fahrzeug einen niedrigeren Kraftstoffverbrauch bei gleichzeitig gutem, bzw. verbessertem Abriebverhalten aufweisen werden.

Die Dispersionskoeffizienten liegen für alle drei untersuchten Fällungskieselsäuren (Beispiel 1b, 2b und 3b) bei größer oder gleich 90 % und sind daher als hoch dispersible (HD) Kieselsäuren zu klassifizieren (Tabelle 9).

Tabelle 9: Dispersionskoeffizienten nach Medalia

| Beispiel 1b | Beispiel 2b | Beispiel 3b |
|---|---|---|
| 98 % | 95 % | 90% |

Das beschriebene gummitechnische Verhalten ist insbesondere auf die Breite $\gamma$ der Porengrößenverteilung zurückzuführen. Es liegen Kieselsäuremorphologien vor, die wesentlich stabiler sind als die bisher bekannten und dadurch trotz guter Dispergierbarkeit auch nach der Einarbeitung in die Kautschukmatrix bestehen bleiben. Daraus resultieren Bereiche mit hoher Kieselsäuredichte und Bereiche in denen die Polymermatrix vorherrscht, wobei vor allem letztere Bereiche zu deutlich geringeren Hystereseverlusten führen.

Vor allem durch die hohe Silanolgruppenanzahl und die hohe Silanolgruppendichte (Searszahl $V_2$/CTAB) wird über das bifunktionelle Silan mehr Polymer angebunden als gemeinhin üblich. Es entsteht ein sehr gutes Verstärkungsverhalten, was durch den hohen Spannungswert 300 % und dem niedrigen DIN-Abrieb angezeigt wird.

Durch das niedrige Zetapotential der erfindungsgemäßen Kieselsäuren und der damit verbundenen erhöhten Oberflächenaktivität kann die aufgrund der verschiedenen Polaritäten normaler Weise geringe Polymer / Kieselsäurewechselwirkung deutlich verbessert werden, wie es durch das erhöhte Verstärkungsverhalten sowie die erhöhten Dmax - Dmin-Werte angezeigt wird.

Unterstützt wird dieses Verhalten durch eine geringe Mikroporosität, wodurch weniger niedermolekulare Verbindungen, wie z.B. Beschleuniger oder Aktivatoren dem Reaktionsgleichgewicht entzogen werden. Dieses trägt zu einer effektiven Vulkanisation bei, wodurch eine höhere Vernetzungsdichte in Verbindung mit einer verbesserten Verstärkung erzeugt wird.

## Patentansprüche

1. Verfahren zur Herstellung von Fällungskieselsäuren, **dadurch gekennzeichnet,**
**dass** nacheinander

   a) eine wässrige Lösung eines Alkali- und/oder Erdalkalisilikats und/oder einer organischen und/oder anorganischen Base vorgelegt wird, wobei die Vorlage eine Akalizahl von 20 bis 40 aufweist,
   b) in diese Vorlage unter Rühren bei 55 bis 85 °C gleichzeitig Alkali- und/oder Erdalkalisilikat und ein Säuerungsmittel bis zum Viskositätsanstieg dosiert wird,
   c) die Zudosierung für 35 bis 85 Minuten, bevorzugt unter Einhaltung der am Ende von Stufe b) erreichten Temperatur, gestoppt wird,
   d) anschließend werden gleichzeitig Alkali- und/oder Erdalkalisilikat und Säuerungsmittel, bei einer Temperatur von 55 bis 85 °C, bevorzugt bei gleicher Temperatur wie am Ende von Stufe b) oder c), zudosiert, bis ein Feststoffgehalt von 90 bis 140 g/l erreicht ist,
   g) die erhaltene Suspension 1 bis 120 Minuten bei 80 bis 98 °C nachgerührt,
   h) mit einem Säuerungsmittel auf einen pH-Wert von 2,5 bis 5,0 angesäuert und
   i) filtriert und getrocknet wird.

2. Verfahren nach Anspruch 1, **dadurch gekennzeichnet,**
**dass** die Zuflussgeschwindigkeit in Schritt d) größer ist als in Schritt b).

3. Verfahren nach einem der Ansprüche 1 oder 2, **dadurch gekennzeichnet,**
**dass** im Schritt b) Alkali- und/oder Erdalkalisilikat und Säuerungsmittel so dosiert werden, dass die Alkalizahl während dieses Schrittes konstant bleibt.

4. Verfahren nach einem der Ansprüche 1 bis 3, **dadurch gekennzeichnet,**
**dass** im Schritt d) Alkali- und/oder Erdalkalisilikat und Säuerungsmittel so dosiert werden, dass die Alkalizahl während dieses Schrittes konstant bleibt.

5. Verfahren nach einem der Ansprüche 1 bis 4, **dadurch gekennzeichnet,**
**dass** die Alkalizahl in Schritt a) bis d) zwischen 20 und 35, bevorzugt zwischen 25 und 35 liegt.

6. Verfahren nach einem der Ansprüche 1 bis 5, **dadurch gekennzeichnet,**
**dass** nach Schritt d) der pH-Wert in Schritt e) durch Zugabe von Säure auf 3 bis 11, bevorzugt 7 bis 10, eingestellt wird.

7. Verfahren nach Anspruch 6, **dadurch gekennzeichnet,**
**dass** nach Schritt e) der pH-Wert in einem zusätzlichen Schritt f) durch Zugabe einer basischen Verbindung auf 8 bis 14 erhöht wird.

8. Verfahren nach Anspruch 1 bis 7, **dadurch gekennzeichnet,**
**dass** in mindestens einem der Schritte a) bis h) die Fällsuspension mittels eines zusätzlichen Scheraggregats geschert wird.

9. Verfahren nach einem der Ansprüche 1 bis 8, **dadurch gekennzeichnet,**
**dass** in den Schritten b) und d) die Schwefelsäure direkt auf den Scherkopf des zusätzlichen Scheraggregats dosiert wird, so dass sofort eine intensive Einmischung der Säure in die Fällsuspension und damit eine möglichst homogene und rasche Verteilung erfolgt.

10. Verfahren nach einem der Ansprüche 1 bis 9, **dadurch gekennzeichnet,**
**dass** als Base ein Alkali- und/oder Erdalkalisilikat und/oder ein Alkali- und/oder ein Erdalkalihydroxid verwendet wird.

**11.** Verfahren nach einem der Ansprüche 1 bis 10, **dadurch gekennzeichnet,**
**dass** während der Schritte a) bis h) eine Zugabe eines organischen oder anorganischen Salzes erfolgt.

**12.** Verfahren nach einem der Ansprüche 1 bis 11, **dadurch gekennzeichnet,**
**dass** zur Trocknung ein Stromtrockner, Sprühtrockner, Etagentrockner, Bandtrockner, Drehrohrtrockner, Flash-Trockner, Spin-Flash-Trockner oder Düsenturmtrockner eingesetzt wird.

**13.** Verfahren nach einem der Ansprüche 1 bis 12, **dadurch gekennzeichnet,**
**dass** nach der Trocknung eine Granulation mit einem Walzenkompaktor durchgeführt wird.

**14.** Verfahren nach den Ansprüchen 1 bis 13, **dadurch gekennzeichnet,**
**dass** die Fällungskieselsäure mit linearen, cyclischen und/oder verzweigten Silanen, Silazanen, Siloxanverbindungen und/oder siliziumorganischen Verbindungen modifiziert wird.

**15.** Verfahren nach Anspruch 14, **dadurch gekennzeichnet,**
**dass** Bis(3-triethoxysilylpropyl)tetrasulfan oder Bis(3-triethoxysilylpropyl)disulfan zur Modifizierung der Fällungskieselsäure verwendet wird.

**16.** Fällungskieselsäure **gekennzeichnet durch** folgende physikalisch-chemische Parameter:

| | |
|---|---|
| relative Breite $\gamma$ der Porengrößenverteilung | 4,0 - 10,0 (g nm)/ml, |
| BET-Oberfläche | 90 - 320 $m^2$/g, |
| CTAB-Oberfläche | 100 - 200 $m^2$/g, |
| Searszahl $V_2$ | 25 - 40 ml/(5 g), |
| Searszahl $V_2$/CTAB-Verhältnis | 0,16 - 0,28 ml/(5 $m^2$), |
| Quotient | BET/CTAB- 0,90 - 1,30 |

**17.** Fällungskieselsäure nach Anspruch 16, **dadurch gekennzeichnet,**
**dass** das Zetapotential bei pH 5 von -12 bis -30 mV beträgt.

**18.** Fällungskieselsäure nach einem der Ansprüche 16 oder 17, **dadurch gekennzeichnet,**
**dass** das Öladsorptionsvermögen, gemessen als DBP-Zahl, 200 bis 330 g/(100 g) beträgt.

**19.** Fällungskieselsäure nach einem der Ansprüche 16 bis18, **dadurch gekennzeichnet,**
**dass** der $Al_2O_3$-Gehalt 0,001 bis 5 Gew.-% beträgt.

**20.** Fällungskieselsäure nach einem der Ansprüche 16 bis 19, **dadurch gekennzeichnet,**
**dass** sie in Form eines Granulats vorliegt und dass der Siebrückstand (Ro-Tap) auf einem 300 $\mu$m-Sieb mindestens 80 Gew.-% beträgt.

**21.** Fällungskieselsäure nach einem der Ansprüche 16 bis 20, **dadurch gekennzeichnet,**
**dass** sie in Form eines Granulats vorliegt und dass die Siebfraktion < 75 $\mu$m (Ro-Tap) maximal 10 Gew.-% beträgt.

**22.** Fällungskieselsäure nach einem der Ansprüche 16 bis 21, **dadurch gekennzeichnet,**
**dass** der Kohlenstoffgehalt zwischen 0,1 und 20,0 Gew.-% liegt.

**23.** Verwendung von Kieselsäuren gemäß einem der Ansprüche 16 bis 22 zur Herstellung von Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

**24.** Vulkanisierbare Kautschukmischungen und Vulkanisate, enthaltend zumindest eine Fällungskieselsäure gemäß einem der Ansprüche 16 bis 22 als Füllstoff.

**25.** Reifen, enthaltend zumindest eine Fällungskieselsäure nach einem der Ansprüche 16 bis 22.

## Claims

1. Process for production of precipitated silicas, **characterized in that**, in succession,

   a) an aqueous solution of an alkali metal silicate and/or alkaline earth metal silicate and/or of an organic and/or inorganic base is used as initial charge, the alkali number of the initial charge being from 20 to 40,
   b) alkali metal silicate and/or alkaline earth metal silicate and an acidifier is simultaneously metered into this initial charge with stirring at from 55 to 85°C until viscosity rises,
   c) the feed is stopped for from 35 to 85 minutes, preferably while maintaining the temperature reached at the end of stage b),
   d) alkali metal silicate and/or alkaline earth metal silicate and acidifier are then simultaneously fed at a temperature of from 55 to 85°C, preferably at a temperature the same as that at the end of stage b) or c), until a solids content of from 90 to 140 g/l has been reached,
   g) stirring of the resultant suspension is continued for from 1 to 120 minutes at from 80 to 98°C,
   h) an acidifier is used for acidification to a pH of from 2.5 to 5.0 and
   i) filtration and drying is carried out.

2. Process according to Claim 1, **characterized in that** the inflow rate in step d) is greater than in step b).

3. Process according to any one of Claims 1 or 2, **characterized in that**, in step b), alkali metal silicate and/or alkaline earth metal silicate and acidifier are metered in such a way that the alkali number remains constant during this step.

4. Process according to any one of Claims 1 to 3, **characterized in that**, in step d), alkali metal silicate and/or alkaline earth metal silicate and acidifier are metered in such a way that the alkali number remains constant during this step.

5. Process according to any one of Claims 1 to 4, **characterized in that** the alkali number in step a) to d) is from 20 to 35, preferably from 25 to 35.

6. Process according to any one of Claims 1 to 5, **characterized in that**, after step d), the pH in step e) is adjusted via addition of acid to from 3 to 11, preferably from 7 to 10.

7. Process according to Claim 6, **characterized in that**, after step e), the pH is increased to from 8 to 14 in an additional step f) via addition of a basic compound.

8. Process according to any of Claims 1 to 7, **characterized in that**, in at least one of the steps a) to h), the precipitated suspension is sheared by means of an additional shear assembly.

9. Process according to any one of Claims 1 to 8, **characterized in that**, in the steps b) and d), the sulphuric acid is metered directly onto the shear head of the additional shear assembly, in such a way as immediately to produce intensive incorporation of the acid by mixing into the precipitated suspension, and thus very homogeneous and rapid dispersion.

10. Process according to any one of Claims 1 to 9, **characterized in that** an alkali metal silicate and/or alkaline earth metal silicate and/or an alkali metal hydroxide and/or an alkaline earth metal hydroxide is used as base.

11. Process according to any one of Claims 1 to 10, **characterized in that**, during steps a) to h), an organic or inorganic salt is added.

12. Process according to any one of Claims 1 to 11, **characterized in that** a pneumatic dryer, spray dryer, staged dryer, belt dryer, rotating-tube dryer, flash dryer, spin-flash dryer or spray tower dryer is used for the drying process.

13. Process according to any one of Claims 1 to 12, **characterized in that**, after the drying process, a granulation process is carried out with a roller compacter.

14. Process according to any of Claims 1 to 13, **characterized in that** the precipitated silica is modified with linear, cyclic and/or branched silanes, silazanes, siloxane compounds and/or organosilicon compounds.

15. Process according to Claim 14, **characterized in that** (3-triethoxysilylpropyl)tetrasulfane or bis(3-triethoxysilylpropyl)disulfane is used for modification of the precipitated silica.

**16.** Precipitated silica, **characterized by** the following physicochemical parameters:

| | |
|---|---|
| Relative breadth $\gamma$ of pore size distribution | 4.0 - 10.0 (g nm)/ml, |
| BET surface area | 90 - 320 $m^2/g$, |
| CTAB surface area | 100 - 200 $m^2/g$, |
| Sears number $V_2$ | 25 - 40 ml/(5 g), |
| Sears number $V_2$/CTAB ratio | 0.16 - 0.28 ml/(5 $m^2$), |
| BET/CTAB quotient | 0.90 - 1.30 |

**17.** Precipitated silica according to Claim 16, **characterized in that** the zeta potential at pH 5 is from -12 to -30 mV.

**18.** Precipitated silica according to any one of Claims 16 or 17, **characterized in that** the oil adsorbency measured as DBP number is from 200 to 330 g/(100 g).

**19.** Precipitated silica according to any one of Claims 16 to 18, **characterized in that** the $Al_2O_3$ content is from 0.001 to 5% by weight.

**20.** Precipitated silica according to any one of Claims 16 to 19, **characterized in that** it takes the form of a granulated material, and that the (Ro-Tap) sieve residue on a 300 μm sieve is at least 80% by weight.

**21.** Precipitated silica according to any one of Claims 16 to 20, **characterized in that** it takes the form of a granulated material, and that the < 75 μm (Ro-Tap) sieve fraction is at most 10% by weight.

**22.** Precipitated silica according to any one of Claims 16 to 21, **characterized in that** the carbon content is from 0.1 to 20.0% by weight.

**23.** Use of silicas according to any one of Claims 16 to 22 for production of elastomer mixtures, of vulcanizable rubber mixtures and/or of other vulcanizates, for example of pneumatic and other tires, of tire treads, of cable sheathing, of hoses, of drive belts, of conveyor belts, of V-belts, of roller coverings, of shoe soles, of gaskets, and of damping elements.

**24.** Vulcanizable rubber mixtures and vulcanizates, comprising at least one precipitated silica according to any one of Claims 16 to 22, as filler.

**25.** Tire, comprising at least one precipitated silica according to any one of Claims 16 to 22.

## Revendications

**1.** Procédé pour la préparation de silices précipitées, **caractérisé en ce que**, consécutivement

a) on dispose au préalable une solution aqueuse d'un silicate de métal alcalin et/ou alcalino-terreux et/ou d'une base organique et/ou inorganique, la charge préalable présentant un indice alcalin de 20 à 40,
b) on dose dans cette charge préalable, sous agitation, à 55 jusqu'à 85°C simultanément du silicate de métal alcalin et/ou alcalino-terreux et un agent d'acidification jusqu'à l'augmentation de viscosité,
c) on arrête le dosage pendant 35 à 85 minutes, de préférence en maintenant la température atteinte à la fin de l'étape b),
d) ensuite, on dose simultanément du silicate de métal alcalin et/ou alcalino-terreux et de l'agent d'acidification, à une température de 55 à 85°C, de préférence à la même température que celle à la fin de l'étape b) ou c), jusqu'à ce qu'une teneur en solides de 90 à 140 g/l soit atteinte,
g) on post-agite la suspension obtenue pendant 1 à 120 minutes à 80 jusqu'à 98°C,
h) on acidifie avec un agent d'acidification à un pH de 2,5 à 5,0 et
i) on filtre et on sèche.

2. Procédé selon la revendication 1, **caractérisé en ce que** la vitesse d'addition dans l'étape d) est supérieure à celle dans l'étape b).

3. Procédé selon l'une quelconque des revendications 1 ou 2, **caractérisé en ce que** dans l'étape b), le silicate de métal alcalin et/ou alcalino-terreux et l'agent d'acidification sont dosés de manière telle que l'indice alcalin reste constant pendant cette étape.

4. Procédé selon l'une quelconque des revendications 1 à 3, **caractérisé en ce que** dans l'étape d), le silicate de métal alcalin et/ou alcalino-terreux et l'agent d'acidification sont dosés de manière telle que l'indice alcalin reste constant pendant cette étape.

5. Procédé selon l'une quelconque des revendications 1 à 4, **caractérisé en ce que** l'indice alcalin dans l'étape a) à d) se situe entre 20 et 35, de préférence entre 25 et 35.

6. Procédé selon l'une quelconque des revendications 1 à 5, **caractérisé en ce qu'**après l'étape d), le pH dans l'étape e) est réglé par addition d'acide à 3 jusqu'à 11, de préférence à 7 jusqu'à 10.

7. Procédé selon la revendication 6, **caractérisé en ce qu'**après l'étape e), le pH est augmenté dans une étape supplémentaire f) par addition d'un composé basique à 8 jusqu'à 14.

8. Procédé selon la revendication 1 à 7, **caractérisé en ce que** dans au moins une des étapes a) à h), la suspension précipitée est cisaillée au moyen d'un appareil de cisaillement supplémentaire.

9. Procédé selon l'une quelconque des revendications 1 à 8, **caractérisé en ce que** dans les étapes b) et d), l'acide sulfurique est dosé directement sur la tête de cisaillement de l'appareil de cisaillement supplémentaire, de manière telle qu'il se produit immédiatement un délayage intensif de l'acide dans la suspension précipitée et donc une répartition la plus homogène et rapide possible.

10. Procédé selon l'une quelconque des revendications 1 à 9, **caractérisé en ce qu'**on utilise, comme base, un silicate de métal alcalin et/ou alcalino-terreux et/ou un hydroxyde de métal alcalin et/ou alcalino-terreux.

11. Procédé selon l'une quelconque des revendications 1 à 10, **caractérisé en ce que** pendant les étapes a) à h), une addition d'un sel organique ou inorganique a lieu.

12. Procédé selon l'une quelconque des revendications 1 à 11, **caractérisé en ce que** pour le séchage, on utilise un sécheur-convoyeur, un sécheur à pulvérisation, un sécheur à étages, un sécheur à bande, un sécheur à tube rotatif, un sécheur instantané ("flash"), un sécheur rotatif instantané ("spin-flash") ou un sécheur à tour de pulvérisation.

13. Procédé selon l'une quelconque des revendications 1 à 12, **caractérisé en ce qu'**on réalise, après le séchage, une granulation avec un compacteur à cylindres.

14. Procédé selon les revendications 1 à 13, **caractérisé en ce que** la silice précipitée est modifiée avec des silanes, des silazanes, des composés siloxane et/ou des composés organosiliciés linéaires, cycliques et/ou ramifiés.

15. Procédé selon la revendication 14, **caractérisé en ce qu'**on utilise du bis(3-triéthoxysilylpropyl)tétrasulfane ou du bis(3-triéthoxysilylpropyl)disulfane pour la modification de la silice précipitée.

16. Silice précipitée, **caractérisée par** les paramètres physico-chimiques suivants :

largeur relative $\gamma$ de la

| | |
|---|---|
| répartition des tailles des pores | 4,0-10,0 (g nm)/ml, |
| Surface BET | 90-320 $m^2$/g, |
| Surface CTAB | 100-200 $m^2$/g, |
| Indice de Sears $V_2$ | 25-40 ml/(5 g), |
| Rapport indice de Sears $V_2$/CTAB | 0,16-0,28 ml/(5 $m^2$), |

(suite)

| | |
|---|---|
| Quotient BET/CTAB | 0,90-1,30. |

**17.** Silice précipitée selon la revendication 16, **caractérisée en ce que** le potentiel zêta à pH 5 vaut -12 à -30 mV.

**18.** Silice précipitée selon l'une quelconque des revendications 16 ou 17, **caractérisée en ce que** la capacité d'adsorption d'huile, mesurée en tant qu'indice DBP, vaut 200 à 330 g/(100 g).

**19.** Silice précipitée selon l'une quelconque des revendications 16 à 18, **caractérisée en ce que** la teneur en $Al_2O_3$ vaut 0,001 à 5% en poids.

**20.** Silice précipitée selon l'une quelconque des revendications 16 à 19, **caractérisée en ce qu'**elle se trouve sous forme d'un granulat et **en ce que** le résidu de tamis (Ro-Tap) sur un tamis de 300 μm vaut au moins 80% en poids.

**21.** Silice précipitée selon l'une quelconque des revendications 16 à 20, **caractérisée en ce qu'**elle se trouve sous forme d'un granulat et **en ce que** la fraction tamisée < 75 μm (Ro-Tap) vaut au maximum 10% en poids.

**22.** Silice précipitée selon l'une quelconque des revendications 16 à 21, **caractérisée en ce que** la teneur en carbone est située entre 0,1 et 20,0% en poids.

**23.** Utilisation de silices selon l'une quelconque des revendications 16 à 22 pour la préparation de mélanges d'élastomères, de mélanges de caoutchouc vulcanisables et/ou d'autres produits vulcanisés, tels que des chambres à air, des bandes de roulement de pneus, des gaines de câbles, des flexibles, des courroies de transmission, des bandes transporteuses, des courroies trapézoïdales, des revêtements de cylindres, des pneus, des semelles pour chaussures, des joints et des éléments amortisseurs.

**24.** Mélanges de caoutchouc vulcanisables et produits vulcanisés, contenant au moins une silice précipitée selon l'une quelconque des revendications 16 à 22 comme charge.

**25.** Pneus, contenant au moins une silice précipitée selon l'une quelconque des revendications 16 à 22.

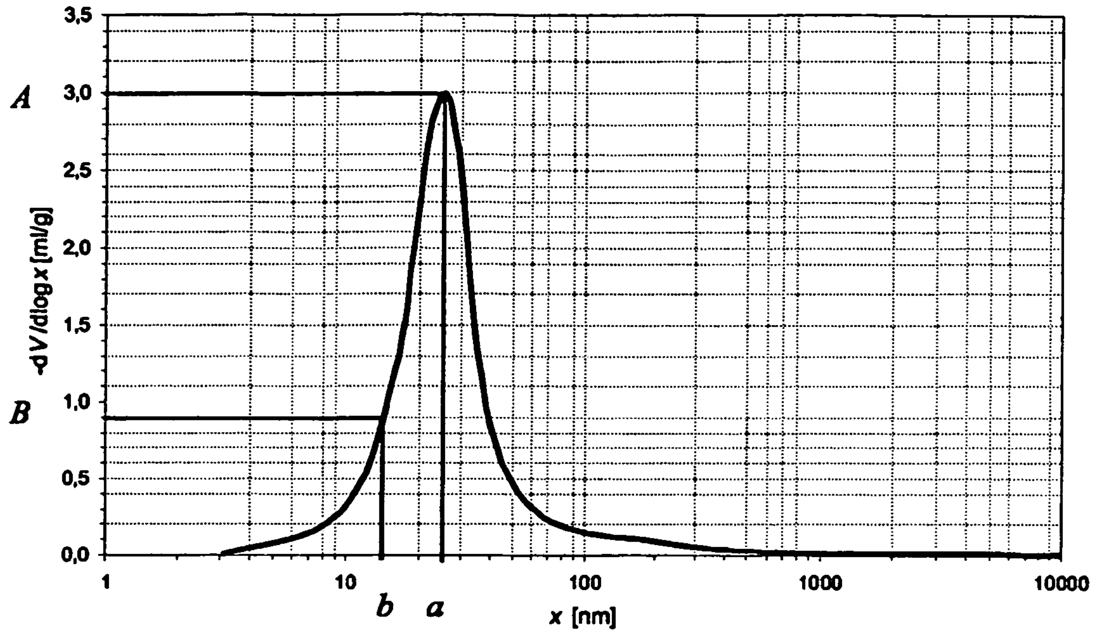


Figur 1: Typischer Kurvenverlauf der negativen logarithmischen Ableitung des kumulierten Porenvolumens *V* hinsichtlich des Porendurchmessers *x* mit den Merkmalen *a*, *b*, *A* und *B*.

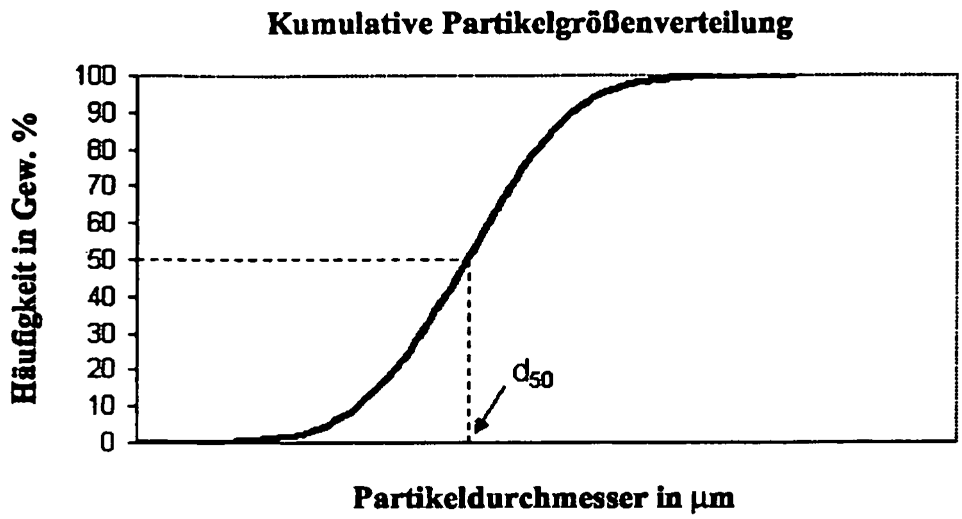
Kumulative Partikelgrößenverteilung
Häufigkeit in Gew. %
100
90
80
70
60
50
40
30
20
10
0
d50
Partikeldurchmesser in µm

Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0501227 A
- EP 0937755 A
- DE 10124298
- EP 0755899 A2
- US 4001379 A
- EP 0901986 A1
- WO 2003016215 A
- EP 0942029 A
- EP 1295850 A1
- EP 0983966 A1
- EP 0643015 A
- DE 2447613
- US 4094771 A
- WO 9909036 A
- DE 10163945
- DE 10223658
- DE 3437473
- DE 19609619
- DE 4004781


### In der Beschreibung aufgeführte Nicht-Patentliteratur


- **S. WOLFF.** Chemical Aspects of Rubber Reinforcement by Fillers. *Rubber Chem. Technol.,* 1996, vol. 69, 325
- **U. GÖRL ; R. PANENKA.** Silanisierte Kieselsäuren - Eine neue Produktklasse für zeitgemäße Mischungsentwicklung. *Kautsch. Gummi Kunstst.,* 1993, vol. 46, 538
- **R. K. ILER.** The Chemistry of Silica. John Wiley & Sons, 1979
- **J. BEHR ; G. SCHRAMM.** Über die Bestimmung der Ölzahl von Kautschukfüllstoffen mit dem Brabender-Plastographen. *Gummi Asbest Kunstst.,* 1966, vol. 19, 912
- **U. GÖRL ; A. HUNSCHE ; A. MÜLLER ; H. G. KOBAN.** Investigations into the Silica/Silane Reaction System. *Rubber Chem. Technol.,* 1997, vol. 70, 608
- **JANZEN, KRAUS.** *Rubber Chem. Technol.,* 1971, vol. 44, 1287
- **W. HOFMANN.** Kautschuktechnologie. Genter Verlag, 1980
- **DR. W. NIEDERMEIER.** Definition und weitere Ausführungen siehe ''New insights into the tear mechanism. *Tire Technology,* 2003
- **H. GEISLER.** DIK aktuell. 1997
- **MEDALIA.** *Rubber Age,* April 1965
- **W. HOFMANN.** Rubber Technology Handbook. Hanser Verlag, 1994